(19) **Europäisches Patentamt**
**European Patent Office**
**Office européen des brevets**

(11) **EP 1 924 010 A1**

(12) **EUROPEAN PATENT APPLICATION**
published in accordance with Art. 153(4) EPC

(43) Date of publication:
**21.05.2008 Bulletin 2008/21**

(51) Int Cl.:
**H04B 7/26** (2006.01)  **H04J 13/00** (2006.01)

(21) Application number: **05782227.2**

(22) Date of filing: **06.09.2005**

(86) International application number:
**PCT/JP2005/016345**

(87) International publication number:
**WO 2007/029314 (15.03.2007 Gazette 2007/11)**

(84) Designated Contracting States:
**DE FR GB IT**

(71) Applicant: **Fujitsu Ltd.**
**Kawasaki-shi, Kanagawa 211-8588 (JP)**

(72) Inventors:
• **UNNO, Masataka**
**Kawasaki-shi**
**Kanagawa 211-8588 (JP)**

• **YONETA, Tsuyoshi**
**Kawasaki-shi**
**Kanagawa 211-8588 (JP)**

(74) Representative: **Stebbing, Timothy Charles**
**Haseltine Lake**
**5th Floor Lincoln House**
**300 High Holborn**
**London, WC1V 7JH (GB)**

(54) **RADIO COMMUNICATION CONTROLLER AND RADIO DEVICE**

(57)     During interactive radio wave transmission between two radio devices, at least one of the radio devices transmits a radio wave containing power control information for controlling the transmission power of the radio wave transmitted from the other radio device according to the radio wave received from the other radio device. A radio communication controller comprises a generator that generates control information for causing each of the radio devices to simultaneously stop transmitting the radio wave and a transmitter that transmits the control information to each of the radio devices.

FIG. 4

EP 1 924 010 A1

## Description

[Technical Field]

The present invention relates to a wireless communication control device and a wireless device.

[Background Art]

A mobile phone service system such as a W-CDMA (Wideband Code Division Multiple Access) system involves conducting radio wave transmit power control (closed loop transmit power control) that uses a channel via which to transmit the radio waves to a terminal device from base station equipment (which is referred to as a downlink individual channel) and a channel via which to transmit the radio waves to the base station equipment from the terminal device (which is referred to as an uplink individual channel) in wireless communications between the terminal device and the base station equipment.

The terminal device, when receiving a signal (a radio wave) from the base station equipment via the downlink individual channel, measures a desired Signal power to Interference signal power Ratio (which is generally abbreviated to SIR; Signal to Interference Ratio) that represents a quality of the received signal. Subsequently, the terminal device compares an SIR measurement result with an SIR target value and generates transmit power control information (called a TPC bit; Transmit Power Control bit) based on this measurement result. At this time, the TPC bit, purporting that the transmission power be increased, is generated if the measurement result is lower than the target value, and the TPC bit, purporting that the transmission power be decreased, is generated if the measurement result is higher than the target value. The TPC bit is contained in data transmitted to the base station equipment and transferred to the base station equipment via an uplink individual channel.

The base station equipment, upon receiving the TPC bit, increases or decreases the transmission power of the downlink individual channel according to the TPC bit. The radio waves based on the transmission power controlled by the TPC bit are thereby transmitted to the base station equipment via the downlink individual channel. The transmission power of the downlink individual channel is controlled by use of a closed loop formed between the terminal device and the base station equipment. Note that the transmission power of the uplink individual channel can be also controlled by the closed loop transmit power control method described above.

The transmission of the radio waves via the downlink individual channel and the uplink individual channel described above is stopped through a wireless communication resource release procedure between the terminal and the base station equipment, which is executed as triggered by terminating a talk (ring-off) between the terminal device and a communication partner terminal device.

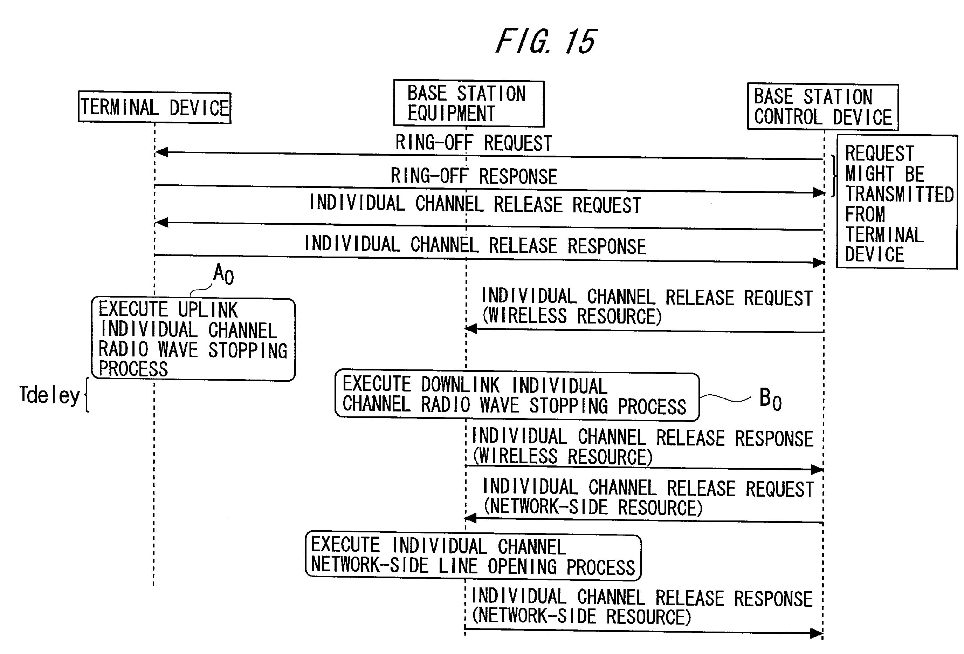

FIG. 15 is a sequence diagram showing the ring-off procedure in a conventional mobile phone service. FIG. 15 shows the ring-off procedure among the terminal device, the base station equipment and a base station control device. Further, FIG. 15 shows a sequence in a case where the communication partner terminal device (unillustrated) communicating with the terminal device sends a ring-off request.

As shown in FIG. 15, the terminal device, after responding to the ring-off request given from the base station control device receiving the ring-off request of the communication partner terminal device, in response to an individual channel release request received from the base station control device, transmits an individual channel release response and executes an uplink individual channel radio wave stopping process. With this operation, the transmission of the radio waves to the uplink individual channel is stopped, and the uplink individual channel is released.

On the other hand, the base station equipment executes a downlink individual channel radio wave stopping process as triggered by receiving an individual channel release request (of a wireless resource) from the base station control device. With this operation, the transmission of the radio waves to the downlink individual channel is stopped, and the downlink individual channel is released.

The following are the documents of the prior arts related to the present invention
[Patent document 1] Japanese Patent Laid-Open Publication No.2004-112097
[Patent document 2] Japanese Patent Laid-Open Publication No.2004-32211
[Non-Patent document 1] 3GPP TS25.331 V6.5.0, Chapter 8.1.4, March in 2005.
[Non-Patent document 2] "W-CDMA Mobile Communication System" authored by Keiji Tachikawa, published by Maruzen in Japan, pp.178-179, June in 2001.

[Disclosure of the Invention]

[Problems to be solved by the invention]

The sequence illustrated in FIG. 15 is that the terminal device and the base station equipment stop, based on the individual channel release request given from the base station control device, transmitting the radio waves to the downlink individual channel and the uplink individual channel. At this time, a timing at which the individual channel release request reaches the terminal device is different from a timing at which this request reaches the base station equipment, and hence the timings, at which the terminal device and the base station equipment stop transmitting the radio waves, might be different from each other. An example illustrated in FIG. 15 is that a delay time $T_{delay}$ occurs during a period extending from a timing $A_0$ when the terminal device stops the transmission to a timing $B_0$ when the base station equipment stops the transmission.

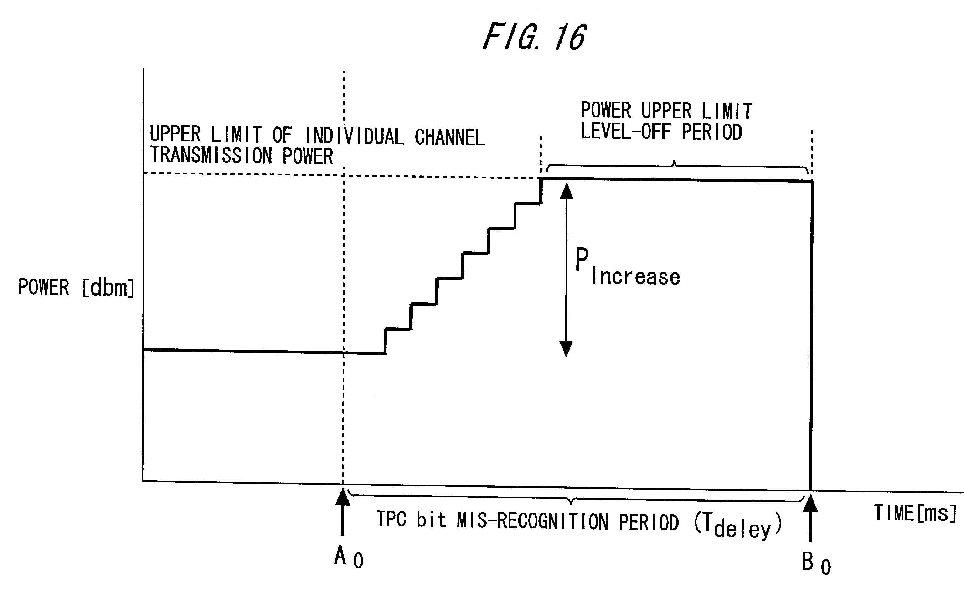

This delay time $T_{delay}$ causes a state where the base station equipment must conduct the transmit power control of the downlink individual channel and is, nevertheless, unable to receive the transmit power control information (TCP bit) from the terminal device. For this reason, there was a possibility that a malfunction occurs in the transmit power control in the base station equipment, and the transmission power of the downlink individual channel might fluctuate in an unpredictable state. For example, it is considered that the base station equipment is disabled to receive the TPC bit and therefore has occurrence of mis-recognition of the TPC bit, and continues to increase the transmission power of the downlink individual channel. In this case, for instance, as shown in FIG. 16, it is considered that for the delay time $T_{delay}$ (during the period of $A_0$ through $B_0$), the transmission power of the downlink individual channel continues to increase up to an upper limit value ($P_{increase}$), and the transmission power is kept at the upper limit value till the transmission of the radio waves is stopped by the downlink individual channel release process. In FIG. 16, the delay time $T_{delay}$ can be grasped as a TPC mis-recognition period.

When this type of power control is performed, in addition to dissipation of the electric power, the radio waves of the downlink individual channel might interfere with the other channels. This problem might arise in the terminal device if the base station equipment stops transmitting the radio waves earlier than the terminal device.

Further, if the base station equipment is mounted with a system that refers to remaining electric power into which already-allocated electric power is subtracted from total electric power allocable in the downlink direction in order to determine to accept a new call, the acceptance of the new call might be rejected due to a futile increase (the dissipation of the electric power) in the already-allocated electric power.

The present invention was devised in view of the problems described above. It is an object of the present invention to provide a technology of restraining occurrence of a malfunction of transmit power control due to non-reach of control information in the transmit power control of radio waves transmitted to the side of a communication partner according to the control information given from the communication partner.

[Means for solving the Problems]

The present invention adopts the following configurations in order to solve the problems given above.

(1) Namely, a wireless communication control device (corresponding to a base station control device 3) according to the invention of the present application comprises:

a generating unit (corresponding to a call connection processing unit 61) generating control information used for respective wireless devices to simultaneously stop transmitting radio waves with respect to the two wireless devices transmitting, when the radio waves are transmitted and received bidirectionally between the wireless devices (one wireless device is base station equipment 2, and another wireless device is a terminal device 1), to another wireless device, the radio waves containing power control information for controlling, based on the radio waves received by at least one wireless device from another wireless device, transmission power of the radio waves transmitted by another wireless device; and a transmitting unit (corresponding to a base station IF 18) transmitting the control information toward each of the wireless devices.

According to this configuration, there are the wireless devices transmitting and receiving the radio waves bidirectionally. At least one wireless device of these wireless devices transmits, to another wireless device, the radio waves containing the power control information for controlling the transmission power of the radio waves transmitted by another wireless device on the basis of the radio waves received from another wireless device. The wireless communication control device can generate the control information used for the respective wireless devices to simultaneously stop transmitting the radio waves to the other wireless devices, and can transmit the control information to each of the wireless devices.

(2) Further, in the wireless communication control device according to the invention of the present application, the control information may be timing information that specifies a timing when each of said wireless devices stops transmitting the radio waves.

According to this configuration, the control information may be the timing information that specifies the timing at which the wireless device stops transmitting the radio waves. The timing designated by the wireless communication control device enables the respective wireless devices to stop transmitting the radio waves to the mutual wireless devices at this designated timing.

(3) Further, in the wireless communication control device according to the invention of the present application, the generating unit may generate the timing information specified by use of a sequence number of a frame transmitted and received as carried on the radio waves between the wireless devices.

According to this configuration, the generating unit may generate the timing information by use of the sequence number of the frame transmitted and received as carried on the radio waves between the wireless devices. Moreover, a CFN (Connection Frame Number) may also be used as this sequence number.

(4) Still further, the wireless communication control device according to the invention of the present application may further comprise a receiving unit receiving a message for terminating the transmission and the reception of the radio waves, wherein the generating unit may determine the radio wave transmission stop timing in each of the wireless devices on the basis of the time when receiving the message, and may generate the control information containing the timing. Yet further, the generating unit may determine the radio wave transmission stop timing in each of the wireless devices on the basis of the time when transmitting the message, and may generate the control information containing the timing.

According to this configuration, the wireless communication control device may further include the receiving unit receiving the message for terminating the transmission and the reception of the radio waves. Subsequently, the generating unit of the wireless communication control device may determine the radio wave transmission stop timing in each of the wireless devices on the basis of the time when receiving the message for the termination thereof, and may generate the control information containing the timing. Moreover, the generating unit may determine the radio wave transmission stop timing in each of the wireless devices on the basis of the time when transmitting the message for the termination thereof, and may generate the control information containing the timing. The message for the termination may be a ring-off request and may also be a ring-off response.

(5) Moreover, a wireless device according to the invention of the present application transmits, when bidirectionally transmitting and receiving radio waves between communication partner wireless devices (which corresponds to "when bidirectionally transmitting and receiving the radio waves between the wireless devices of which one device corresponds to the base station equipment and another device corresponds to the terminal device 1), to the communication partner wireless device the radio waves containing power control information, obtained based on the radio waves received from the communication partner wireless device, for controlling transmission power transmitted by the communication partner wireless device, and/or controlling the transmission power of the radio waves transmitted to the communication partner wireless device on the basis of the power control information contained in the radio waves, which is received from the communication partner wireless device, the wireless device comprising: a receiving unit (corresponding to a line IF 35 of the base station equipment 2, or a wireless unit 46 of the terminal device 1) receiving control information containing a timing at which the communication partner wireless device stops transmitting the radio waves to the wireless device; and a control unit (corresponding to a wireless resource processing unit 39 of the base station equipment 2, or a baseband signal processing unit 45 of the terminal device 1) stopping the transmission of the radio waves to the communication partner wireless device according to the timing in the control information, which is received by the receiving unit.

According to this configuration, the wireless device transmits, when bidirectionally transmitting and receiving radio waves between communication partner wireless devices, to the communication partner wireless device the radio waves containing the power control information, obtained based on the radio waves received from the communication partner wireless device, for controlling the transmission power of the radio waves transmitted by the communication partner wireless device. This type of wireless device and/or the wireless device controlling the transmission power of the radio waves transmitted to the communication partner wireless device on the basis of the power control information contained in the radio waves, which is received from the communication partner wireless device, can receive the control information containing the timing at which the communication partner wireless device stops transmitting the radio waves to the wireless device, and can stop the radio waves to the communication partner wireless device according to the timing contained in the received control information.

The present invention may also be a wireless method executed by the wireless device described above. Further, the present invention may also be a wireless communication control method executed by the wireless communication control device described above.

[Effects of the invention]

It is feasible to provide the technology of restraining the occurrence of the malfunction of the transmit power control due to the non-reach of the control information in the transmit power control of the radio waves transmitted to the communication partner side according to the control information given from the communication partner side.

[Brief Description of the Drawings]

[FIG.1] A diagram of architecture of a communication system in an embodiment of the present invention.
[FIG.2] A basic block diagram of closed loop power control.
[FIG.3] A diagram showing a ring-off sequence according to the present invention.

[FIG.4] A block diagram showing a system of a base station control device according to the present invention.

[FIG.5] A block diagram showing a system of base station equipment according to the present invention.

[FIG.6] A block diagram showing a system of a terminal device according to the present invention.

[FIG.7] A first flowchart showing processes in the base station control device according to the present invention.

[FIG.8] A second flowchart showing the processes in the base station control device according to the present invention.

[FIG.9] A third flowchart showing the processes in the base station control device according to the present invention.

[FIG.10] A fourth flowchart showing the processes in the base station control device according to the present invention.

[FIG.11] A flowchart showing processes in the base station equipment according to the present invention.

[FIG.12] A flowchart showing processes in the terminal device according to the present invention.

[FIG.13] A diagram showing electric power consumed for a individual channel of a wireless resource when the base station equipment according to the present invention terminates a talk (ring-off).

[FIG.14] A diagram showing a ring-off sequence according to a modified example of the present invention.

[FIG.15] A diagram showing a ring-off sequence in the prior art.

[FIG.16] A diagram showing the electric power consumed for the individual channel of the wireless resource when the base station equipment according to the prior art terminates the talk.

[Description of the Reference Numerals and Symbols]

| | |
|---|---|
| UC1 | uplink individual channel (wireless resource) |
| DC1 | downlink individual channel (wireless resource) |
| 1, 1-1 to 1-5 | terminal device |
| 2 | base station equipment |
| 3 | base station control device |
| 4 | receiving unit |
| 5 | SIR measuring unit |
| 6 | SIR target value setting unit |
| 7 | SIR determining unit |
| 8 | TPC bit generating unit |
| 9 | TPC bit synthesizing unit |
| 10 | transmitting unit |
| 11 | receiving unit |
| 12 | TPC bit decoding unit |
| 13 | TPC bit determining unit |
| 14 | power control unit |
| 15 | transmitting unit |
| 16 | device control unit |
| 17 | intra-cabinet switch |
| 18 | base station IF |
| 19 | mobile switchboard IF |
| 20 | terminal device facing signal L2 terminating unit |
| 21 | base station equipment facing signal L2 terminating unit |
| 22 | mobile switchboard facing signal L2 terminating unit |
| 23 | reference timing generating unit |
| 24 | diversity handover function unit |
| 25 | wireless resource management unit |
| 26 | the network-side resource management unit |
| 27 | intra-device resource management unit |
| 28 | timer |
| 29 | timing generating unit |
| 30 | offset storage unit |
| 31 | mobile management unit |
| 32 | wireless quality management unit |
| 33 | wireless unit |
| 34 | baseband signal processing unit |
| 35 | line IF |
| 36 | reference timing generating unit |
| 37 | base station control device facing signal L2 terminating unit |
| 38 | call processing control unit |
| 39 | wireless resource processing unit |
| 40 | network-side resource processing unit |
| 41 | CFN counter |
| 42 | intra-device resource management unit |
| 43 | timer |
| 44 | CODEC unit |
| 45 | baseband signal processing unit |
| 46 | wireless unit |
| 47 | control signal terminating unit |
| 48 | reference timing generating unit |
| 49 | device control unit |
| 50 | microphone |
| 51 | loudspeaker |
| 52 | base station equipment oriented unit |
| 53 | base station control device oriented unit |
| 54 | CFN counter |
| 55 | call connection control unit |
| 56 | timer |
| 57 | mobile switchboard |
| 58 | public network |
| 59 | communication device |
| 60 | CFN counter |
| 61 | call connection processing unit |

[Best mode of Carrying out the Invention]

An embodiment of the present invention will hereinafter be described with reference to the drawings. A configuration in the following embodiment is an exemplification, and the present invention is not limited to the configuration in the embodiments.

« System Architecture»

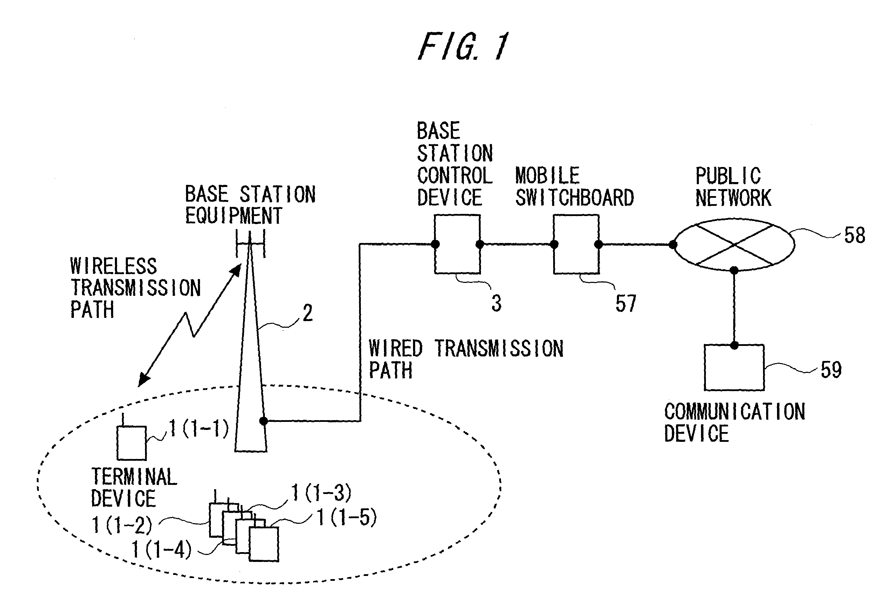

FIG. 1 is a diagram of an architecture of a communication system in the embodiment of the present invention. In FIG. 1, base station equipment 2 can perform communications with terminal devices 1(1-1) - 1(1-5) via a wireless transmission path. A range, in which the base station equipment 2 can communicate with these terminal devices, is called a cell and is encircled by a dotted line in FIG. 1. In addition, the base station equipment 2 can communicate with a base station control device 3 via a wired transmission path. The base station control device 3 can communicate via the wired transmission path with a mobile switchboard 57. The mobile switchboard 57 can communicate via a public network 58 with a communication device 59.

When the terminal device 1 communicates with the communication device 59, the communication system ensures a communication resource called an individual channel between the terminal device 1 and the communication device 59. The following discussion will deal with the individual channel established between the terminal device 1 and the communication device 59 when the terminal device 1 and the communication device 59 perform the communications with each other.

When the terminal device 1 and the communication device 59 perform the communications with each other, the communications between the terminal device 1 and the mobile switchboard 57 and the communications between the mobile switchboard 57 and the communication device 59 are established by call control. Under the call control described above, the terminal device 1 establishes an uplink individual channel of a wireless resource (radio resource) and a downlink individual channel of the wireless resource between the base station equipment 2 and the terminal device 1 itself. The uplink individual channel of the wireless resource is used when transmitting radio waves to the base station equipment 2 from the terminal device 1. The downlink individual channel of the wireless resource is used when transmitting the radio waves to the terminal device 1 from the base station equipment 2. Further, the uplink individual channel of the wireless resource and the downlink individual channel of the wireless resource are also called the wireless transmission path. The base station equipment 2 establishes an individual channel of a network-side resource between the base station control device 3 and the base station equipment 2 itself. The individual channel of the network-side resource is used for the data communications between the base station equipment 2 and the base station control device 3. The base station control device 3 establishes the individual channel of the network-side resource between the mobile switchboard 57 and the control device 3 itself. The individual channel of the network-side resource is used for the data communications between the base station control device 3 and the mobile switchboard 57. Subsequently, the mobile switchboard 57 communicates with the communication device 59 via the public network 58. The terminal device 1 and the communication device 59 perform the communications with each other after establishing the individual channel described above.

On the other hand, when the terminal device 1 and the communication device 59 terminate a talk (ring-off), the communication system releases the individual channel established so far under the call control in order for the terminal device 1, the base station equipment 2, the base station control device 3 and the mobile switchboard 57 to ensure a communication resource for a new call.

Further, in the communication system, the wireless communications between the terminal device 1 and the base station equipment 2 involve conducting transmit power control (closed loop transmit power control) of the radio waves, which employ a downlink individual channel DC1 of the wireless resource and an uplink individual channel UC1 of the wireless resource.

The present embodiment will describe processes executed mainly among the terminal device 1, the base station equipment 2 and the base station control device 3. To begin with, the transmit power control in the communication system will be explained.

«Transmit power control»

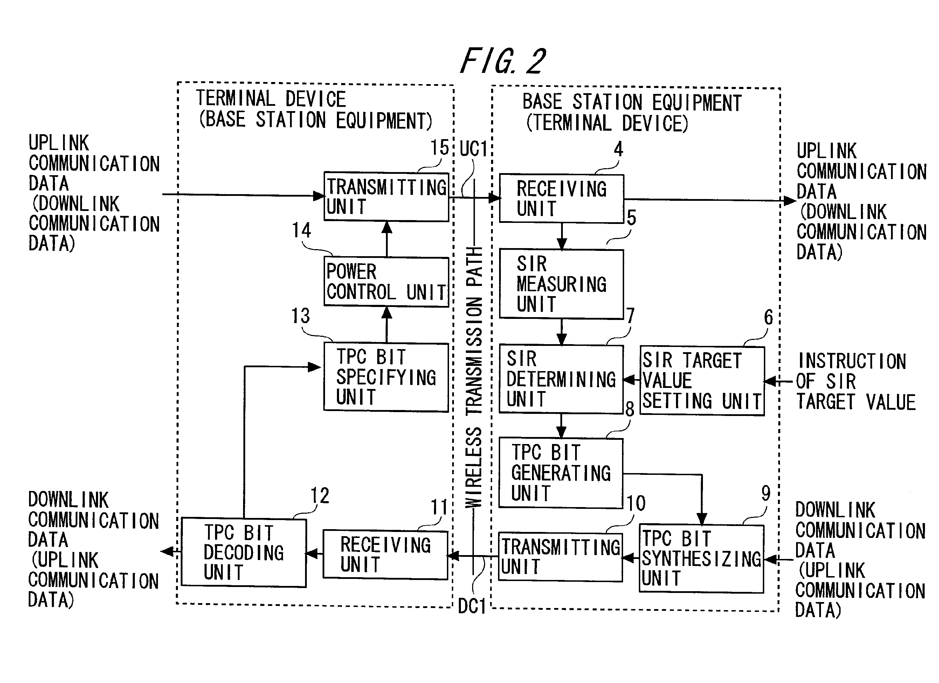

FIG. 2 is a block diagram showing an example of the system architecture for executing closed loop transmit power control between the terminal device 1 and the base station equipment 2 in the present communication system. FIG. 2 illustrates the architecture for conducting the transmit power control of the radio waves transmitted via the uplink individual channel UC1 to the base station from the terminal device.

In FIG. 2, the base station equipment 2 includes, a receiving unit 4, an SIR measuring unit 5, an SIR target value setting unit 6, an SIR determining unit 7, a TPC bit generating unit 8, a TPC bit synthesizing unit 9 and a transmitting unit 10. On the other hand, the terminal device 1 includes, a receiving unit 11, a TPC bit decoding unit 12, a TPC bit determining unit 13, a power control unit 14 and a transmitting unit 15.

The receiving unit 4 of the base station equipment 2 receives a signal (radio wave) from the transmitting unit 15 of the terminal device 1. The signal received from the transmitting unit 15 is transmitted as uplink communication data to the side of the base station control device, and also sent to the SIR measuring unit 5. The SIR measuring unit 5 measures an SIR of the signal received from the receiving unit 4. The SIR measuring unit 5 sends a result of the SIR measurement to the SIR determining unit 7.

The SIR target value setting unit 6 is stored previously with a SIR target value. Further, the SIR target value setting unit 6 may use the SIR target value received from the base station control device 3. In the present communication system, the power control of the terminal device 1 is executed so that a value of the SIR of the received signal gets approximate to the target value. The SIR target value setting unit 6 gives this target value to the SIR determining unit 7.

The SIR determining unit 7 compares the SIR target value given from the SIR target value setting unit 6 with the result of the SIR measurement, which is given from the SIR measuring unit 5. The SIR determining unit 7, if the measured result is larger than the target value, determines to decrease the transmission power of the radio waves transmitted from the transmitting unit 15. Whereas if the measured result is smaller than the target value, the SIR determining unit 7 determines to increase the transmission power. The result of the determination is transmitted to the TPC bit generating unit 8.

The TPC bit generating unit 8 generates a TPC bit on the basis the determination result given from the SIR determining unit 7. The TPC bit generating unit 8, if the SIR determining unit 7 determines to decrease the transmission power, generates the TPC bit for indicating transmission power-down. The TPC bit generating unit 8, whereas if the SIR determining unit 7 determines to increase the transmission power, generates the TPC bit for indicating transmission power-up. The TPC bit generating unit 8 sends the TPC bit to the TPC bit synthesizing unit 9.

The TPC bit synthesizing unit 9 synthesizes the TPC bit sent from the TPC bit generating unit 8 with the downlink communication data. The TPC bit synthesizing unit 9 sends the synthesized data to the transmitting unit 10.

The transmitting unit 10 transmits the radio signal (radio wave) containing the data received from the TPC bit synthesizing unit 9 to the receiving unit 11 of the terminal device 1 via the downlink individual channel DC1.

The receiving unit 11 of the terminal device 1 receives the signal transmitted from the transmitting unit 10. The receiving unit 11 transmits the signal received from the transmitting unit 10 to the TPC bit decoding unit 12.

The TPC bit decoding unit 12 separates the TPC bit and the downlink communication data from the signal received by the receiving unit 11. The TPC bit decoding unit 12 transmits the thus-separated TPC bit to the TPC bit determining unit 13.

The TPC bit determining unit 13 determines, based on a content of the TPC bit received from the TPC bit decoding unit 12, a content of the transmit power control. The TPC bit determining unit 13 determines to decrease the transmission power if the TPC bit indicates the power-down, and determines to increase the transmission power if the TPC bit indicates the power-up. The TPC bit determining unit 13 inputs a result of this determination to the power control unit 14. The power control unit 14 gives the transmitting unit 15 an instruction about increasing or decreasing the power of the transmitted radio waves on the basis the result of the determination by the TPC bit determining unit 13.

The transmitting unit 15 transmits the uplink communication data to the receiving unit 4 via the uplink individual channel. Further, the transmitting unit 15 increases or decreases, based on the instruction given from the power control unit 14, the power of the radio waves transmitted from the terminal device 1. The transmitting unit 15, when receiving the increasing instruction, increases by a predetermined magnitude the power of the transmitted radio waves. While on the other hand, the transmitting unit 15, when receiving the decreasing instruction, decreases by a predetermined magnitude the power of the transmitted radio waves.

As described above, under the closed loop transmit power control shown in FIG. 2, the base station equipment 2 receives the signal transmitted by the terminal device 1 via the uplink individual channel UC1, then measures a quality of communication (quality of service: QoS) of the received signal by use of the SIR, and gives the transmission power instruction of the terminal device 1, which is based on the measured result, to the terminal device 1 via the downlink individual channel DC1. The terminal device 1 increases or decreases the power of the transmitted radio waves on the basis of the instruction given from the base station equipment 2. The power control of the radio waves transmitted to the uplink individual channel UC1 is thereby executed.

Though not shown in FIG. 2, the terminal device 1 has a configuration possessed by the base station equipment 2 illustrated in FIG. 2, while the base station equipment 2 has a configuration possessed by the terminal device 1 illustrated in FIG. 2. In these configurations, the closed loop transmit power control of the downlink individual channel DC1 is executed. These configurations enable the terminal device 1 and the base station equipment 2 to control the power of the transmitted radio waves via both of the uplink individual channel and the downlink individual channel.

Next, the talk termination (ring-off) sequence in the present communication system will be described.

«Ring-off Sequence in Present Communication System»

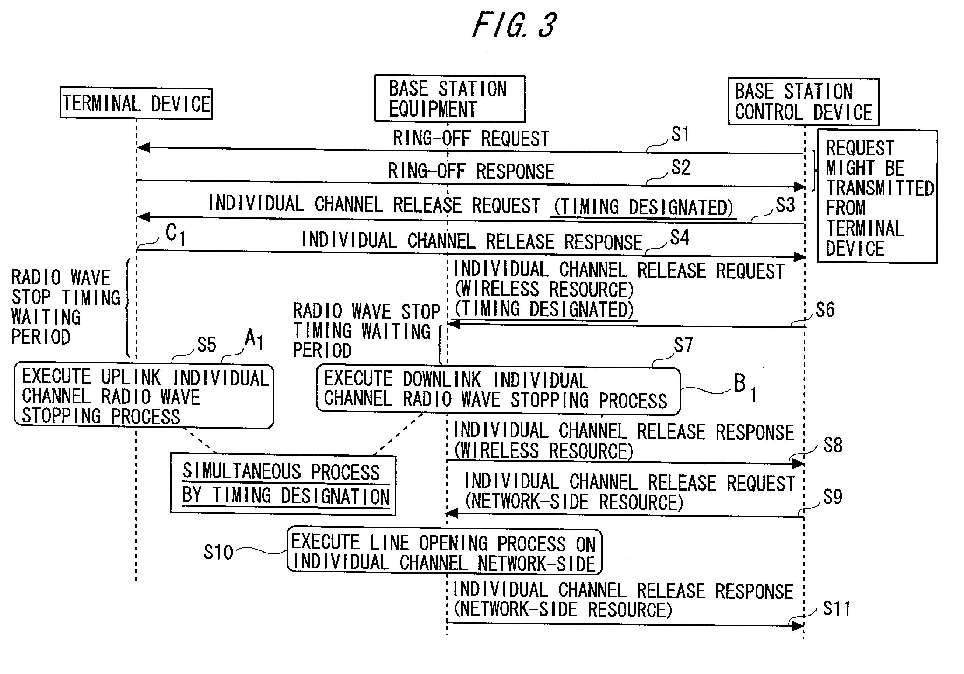

FIG. 3 shows a ring-off sequence in the communication system as illustrated in FIG. 1 in such a case that the mobile switchboard 57 receives via the public network 58 a communication disconnecting signal transmitted from the communication device 59, the disconnecting signal received by the mobile switchboard 57 is transmitted as a ring-off request to the base station control device 3, and the base station control device 3 receives the ring-off request.

To begin with, the base station control device 3 transmits the ring-off request sent from the mobile switchboard 57 to the terminal device 1 (S1).

The terminal device 1, when receiving the ring-off request from the base station control device 3 via the base station equipment 2, transmits a ring-off response to the base station control device 3 (S2).

The base station control device 3, when receiving the ring-off response from the terminal device 1 via the base station equipment 2, transmits an uplink individual channel release request (individual channel release request) of the wireless resource to the terminal device 1 (S3). The individual channel release request contains information of a timing at which the terminal stops transmitting the radio waves via the uplink individual channel.

The terminal device 1, when receiving the individual channel release request from the base station control device 3 via the base station equipment 2, transmits an uplink individual channel release response (individual channel release response) of the wireless resource, transmits the uplink individual channel release response (individual channel release response) of the wireless resource to the base station control device 3 (S4).

The terminal device 1, when receiving the individual channel release request, executes an uplink individual channel radio wave stopping process of the wireless resource on the basis of information on a radio wave stop timing contained in the release request. To be specific, the terminal device 1 stops transmitting the radio waves to the uplink individual channel at a timing A1 based on the timing information contained in the individual channel release response (S5). The terminal device 1, after stopping the radio waves, releases the uplink individual channel.

On the other hand, the base station control device 3, when receiving the individual channel release response from the terminal device 1 via the base station equipment 2, transmits the downlink individual channel release request of the wireless resource to the base station equipment 2 (S6). This individual channel release request contains the information on the timing at which the base station equipment 2 stops transmitting the radio waves via the downlink individual channel.

The base station equipment 2, when receiving the individual channel release request, executes the downlink individual channel radio wave stopping process of the wireless resource on the basis of the information on the radio wave stop timing contained in the release request. Specifically, the base station equipment 2 stops transmitting the radio waves to the downlink individual channel at a timing B1 (which is the same as the timing A1) based on the timing information contained in the release response (S7). The base station equipment 2, after stopping the radio waves transmitted via the downlink individual channel, releases the downlink individual channel. Thus, the terminal device 1 and the base station equipment 2 stop transmitting the radio waves at the same timing.

The base station equipment 2, after releasing the downlink individual channel, transmits the downlink individual channel release response to the base station control device 3 (S8).

The base station control device 3, when receiving the downlink individual channel release response from the base station equipment 2, transmits the individual channel release request of the network-side resource to the base station equipment 2 (S9).

The base station equipment 2, when receiving the individual channel release request from the base station control device 3, executes an individual channel network-side line release process (S10). The base station equipment 2 releases the individual channel for the network-side resource by executing the individual channel network-side line releasing process.

The base station equipment 2, after releasing the individual channel for the network-side resource, transmits the individual channel release response of the network-side resource (S11). The base station control device 3 receives the individual channel release response of the network-side resource from the base station equipment 2.

As described above, in the present communication system, the terminal device 1 stops transmitting the radio waves at the timing (the timing A1 in FIG. 3) in response to the uplink individual channel individual channel release request, and the base station equipment 2 stops transmitting the radio waves at the timing (the timing B1 in FIG. 3) in response to the downlink individual channel individual channel release request. Therefore, the base station control device 3 gets the uplink individual channel release request and the downlink individual channel release request to contain such pieces of timing information as to synchronize the transmission radio wave stop timings with each other (namely, A1 = B1).

Note that a case where the terminal device 1 generates and transmits the ring-off request involves only reversing the ring-off sequence shown in FIG. 3, i.e., the terminal device 1 transmits the ring-off request and receives the ring-off response (namely, the arrowheads of step S1 and step S2 are directed in the reverse direction), and other processes are executed in the same way as the processes described above have been carried out.

«Connection Frame Number»

Further, the present system involves using connection frame numbers (CFNs) as sequence numbers among the terminal device 1, the base station equipment 2 and the base station control device 3. The numbers 0 through 255 are allocated as the CFNs. The numeral of the CFN is incremented by 1 per unit time among the terminal device 1, the base station equipment 2 and the base station control device 3, and is, when incremented to reach "255", next zeroed (0). The CFN exists independently for each call and is, when assigning the call, allocated to each call. Further, the CFNs are synchronized among the terminal device 1, the base station equipment 2 and the base station control device 3. Namely, the CFN in the terminal device 1, the CFN in the base station equipment 2 and the CFN in the base station control device 3 take the same value and are incremented at the same timing. Accordingly, the base station control device 3 notifies the base station equipment 2 and the terminal device 1 of a specified CFN, and is thereby enabled to notify the base station equipment 2 and the terminal device 1 of the specified timing.

«Configuration of Device»

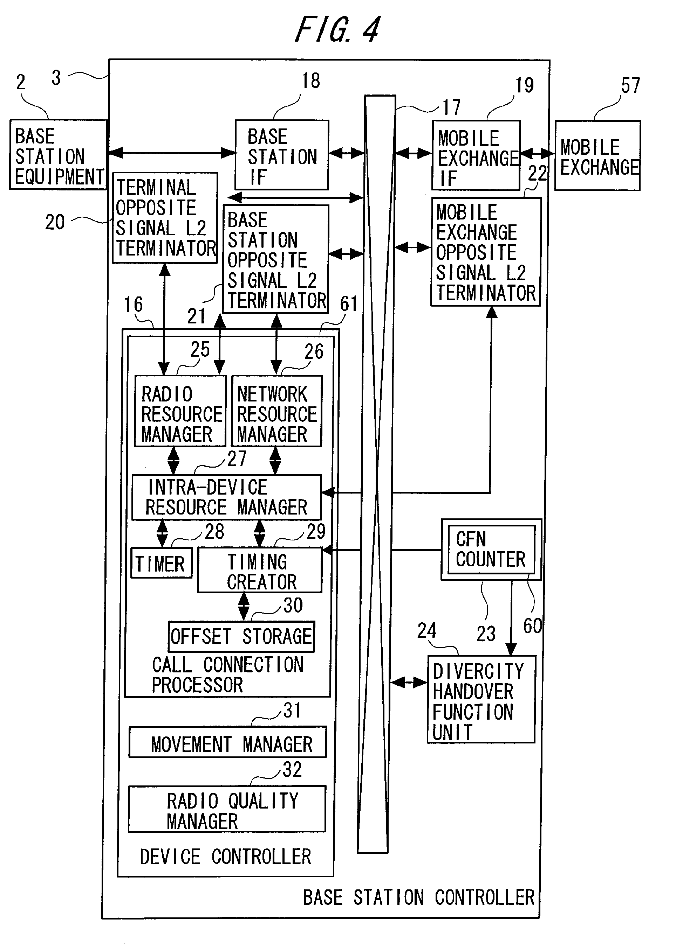

Next, configurations of the base station control device 3, the base station equipment 2 and the terminal device 1 for realizing the ring-off sequence illustrated in FIG. 3 will be respectively explained with reference to FIGS. 4 -6. In the following examples of the configurations, the description will be focused on the configuration employed when terminating the talk (ring-off time).

<Configuration of Base Station Control Device>

FIG. 4 is an explanatory diagram showing an example of the system architecture of the base station control device 3 according to the embodiment of the present invention. In FIG. 4, the base station control device 3 includes a device control unit 16, an intra-cabinet switch 17, a base station interface (IF) 18 serving as a transmitting/receiving unit, a mobile switchboard interface (IF) 19 serving as a transmitting/receiving unit, a terminal device facing signal L2 terminating unit 20, a base station equipment facing signal L2 terminating unit 21, a mobile switchboard facing signal L2 terminating unit 22, a reference timing generating unit 23, and a diversity handover function unit 24.

The device control unit 16 includes a call connection processing unit 61, a mobile management unit 31, a wireless (radio) quality management unit 32. Further, the call connection processing unit 61 includes, as function blocks for realizing the ring-off sequence, a wireless resource (radio resource) management unit 27, a timer 28, a timing generating unit 29 and an offset storage unit 30. The reference timing generating unit 23 has a CFN counter 60.

The device control unit 16 generates control information over the terminal device 1 and the base station equipment 2. Further, the device control unit 16, when receiving the control information over the base station control device 3 from the terminal device 1 and the base station equipment 2, executes the control based on the control information. The device control unit 16 receives, from the reference timing generating unit 23, notification of the timing information for synchronizing the timings among the base station control device 3, the base station equipment 2 and the terminal device 1. The device control unit 16 uses the timing information, of which the reference timing generating unit 23 notifies, for synchronizing the timings among the base station control device 3, the base station equipment 2 and the terminal device 1. The device control unit 16 transmits the information to the mobile switchboard 57 and receives the information from the mobile switchboard 57 via the mobile switchboard facing signal L2 terminating unit 22. The device control unit 16 transmits the information to the base station equipment 2 and receives the information from the base station equipment 2 via the base station equipment facing signal L2 terminating unit 21. The device control unit 16 transmits the information to the terminal device 1 and receives the information from the terminal device 1 via the terminal device facing signal L2 terminating unit 20.

The intra-cabinet switch 17 is used for the communications among the base station IF 18, the mobile switchboard IF 19, the terminal device facing signal L2 terminating unit 20, the base station equipment facing signal L2 terminating unit 21, the mobile switchboard facing signal L2 terminating unit 22 and the diversity handover function unit 24.

The base station IF 18 receives the signal from the base station equipment 2. The base station IF 18 transmits the signal to the base station equipment 2. Further, the base station IF 18 converts the received signal into a data format suited to the processing by the base station control device 3, and converts the signal to be transmitted into a data format suited to the communications via the wired transmission path between the base station control device 3 and the base station equipment 2.

The mobile switchboard IF 19 receives the signal from the mobile switchboard 57. The mobile switchboard IF 19 transmits the signal to the mobile switchboard 57. Furthermore, the mobile switchboard IF 19 converts the received signal into the data format suited to the processing by the base station control device 3, and converts the signal to be transmitted into the data format suited to the communications via the wired transmission path between the base station control device 3 and the mobile switchboard 57.

The terminal device facing signal L2 terminating unit 20, for facilitating the processing within the base station control device 3, extracts a data part out of the signal from the terminal device 1. Further, the terminal device facing signal L2 terminating unit 20 converts the data to be transmitted to the terminal device 1 into a data format suited to the communications with the terminal device 1.

The base station equipment facing signal L2 terminating unit 21, for facilitating the processing within the base station control device 3, extracts a data part out of the signal from the base station equipment 2. Moreover, the base station equipment facing signal L2 terminating unit 21 converts the data to be transmitted to the base station equipment 2 into a data format suited to the communications with the base station equipment 2.

The mobile switchboard facing signal L2 terminating unit 22, for facilitating the processing within the base station control device 3, extracts a data part out of the signal from the base station control device 3. Further, the mobile switchboard facing signal L2 terminating unit 22 converts the data to be transmitted to the mobile switchboard 57 into a data format suited to the communications with the mobile switchboard 57.

The reference timing generating unit 23 generates the timing information for synchronizing the timings among the base station control device 3, the base station equipment 2 and the terminal device 1. The reference timing generating unit 23 notifies the generated timing information to the timing generating unit 29 provided in the device control unit 16 and to the diversity handover function unit 24.

The diversity handover function unit 24 executes a handover of, e.g., the terminal device 1 when the terminal device 1 moves from a certain cell to another cell. The diversity handover function unit 24, when conducting the handover of the terminal device 1, executes control of the handover on the side of the base station control device 3, based on the timing information given from the reference timing generating unit 23.

The mobile management unit 31 manages information on a connection status of the terminal device such as concerning which base station equipment in the pieces of base station equipment each connected to the base station control device 3 the terminal device 1 is linked to. The wireless quality management unit 32 manages the quality of communication (quality of service: QoS) of the terminal device 1. The wireless quality management unit 32 sets, for example, an SIR target value set in the SIR target value setting unit 6 (FIG. 2).

The timer 28 measures the time. The time may take any mode enabling the synchronization among the base station control device 3, the base station equipment 2 and the terminal device 1.

The offset storage unit 30 is stored with a predetermined CFN offset value and a predetermined time width. The offset storage unit 30 is stored with "5" as the predetermined CFN offset value and "60 ms" as the time width. Further, the offset storage unit 30 may also be stored with individual values, i.e., an offset value for the uplink individual channel release process and an offset value for the downlink individual channel release process.

An intra-device resource management unit 27 manages the information transferred and received among the wireless resource management unit 25, the network-side resource management unit 26, the timer 28 and the timing generating unit 29.

The CFN counter 60 retains the CFNs each taking the same value for every call in the base station control device 3, the base station equipment 2 and the terminal device 1 throughout. The CFN counter 60 increments the CFN value by "1" at an interval of a predetermined period of time. The CFN value generated by the CFN counter 60 is used as the timing information for synchronizing the timings among the base station control device 3, the base station equipment 2 and the terminal device 1 for every call.

<Configuration of Base Station Equipment>

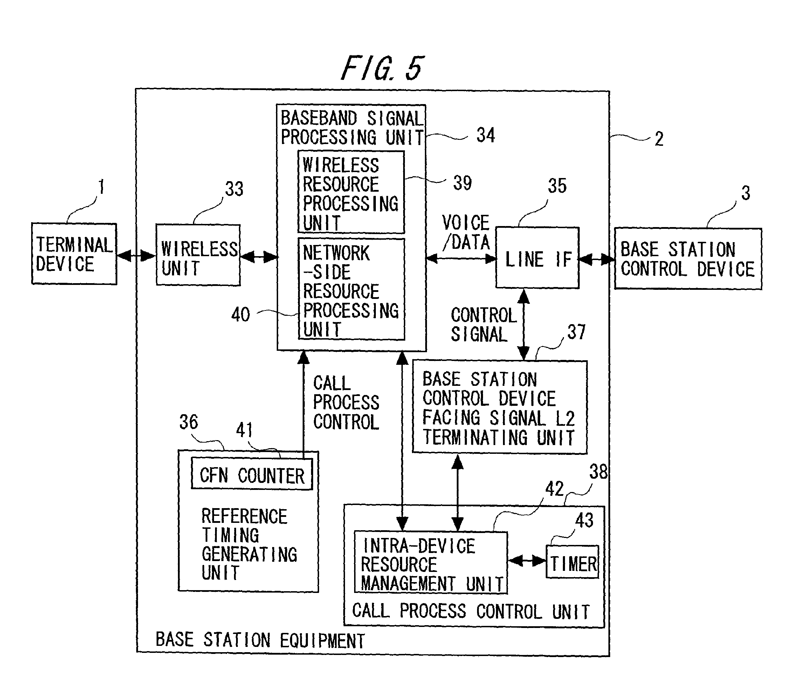

FIG. 5 is an explanatory diagram showing an example of the system architecture of the base station equipment 2 according to the embodiment of the present invention. In FIG. 5, the base station equipment 2 includes a wireless unit 33, a baseband signal processing unit 34, a line IF 35, a reference timing generating unit 36, a base station control device facing signal L2 terminating unit 37 and a call processing control unit 38.

The baseband signal processing unit 34 has a wireless resource (radio resource) processing unit 39 and a network-side resource processing unit 40. The call processing control unit 38 has an intra-device resource management unit 42 and a timer 43. The reference timing generating unit 36 has a CFN counter 41.

The call processing control unit 38 generates the control information with respect to the terminal device 1 and the base station control device 3. Further, the call processing control unit 38, when receiving the control information with respect to the terminal device 1, the base station control device 3 and the base station equipment 2, executes the control based on the control information.

The line IF 35, upon receiving the signal from the base station control device 3, transmits the received signal, if defined as a control signal, to the base station control device facing signal L2 terminating unit 37, and also transmits the received signal, if defined as a voice or data, to the baseband signal processing unit 34. Moreover, the line IF 35, when receiving the voice, the data or the control signal from the baseband signal processing unit 34 or the base station control device facing signal L2 terminating unit 37, converts the received signal into the data format suited to the wired transmission path between the base station equipment 2 and the base station control device 3, and transmits the thus-converted data to the base station control device 3.

The wireless unit 33, upon receiving the signal to be transmitted to the terminal device 1 from the baseband signal processing unit 34, converts the signal into the radio signal and transmits the radio signal to the terminal device 1. Furthermore, the wireless unit 33, when receiving the radio signal from the terminal device 1, converts the received radio signal into a data format suited to the processing within the base station equipment 2, and transmits the converted data to the baseband signal processing unit 34.

The base station control device facing signal L2 terminating unit 37, upon receiving the control signal from the line IF 35, extracts the data out of the control signal, and transmits the data to the intra-device resource management unit 42 provided in the call processing control unit 38. Further, the base station control device facing signal L2 terminating unit 37, when receiving the data from the intra-device resource management unit 42, converts the data into the control signal and transmits the control signal to the line IF 35.

The reference timing generating unit 36 generates the timing information for synchronizing the timings among the base station control device 3, the base station equipment 2 and the terminal device 1. The reference timing generating unit 36 notifies the baseband signal processing unit 34 of the thus-generated timing information.

The timer 43 retains the time. The time may take any mode enabling the synchronization among the base station control device 3, the base station equipment 2 and the terminal device 1. The timer 43 measures a predetermined period of time according to a command given from the intra-device resource management unit 42.

The CFN counter 41 retains the CFNs each taking the same value for every call in the base station control device 3, the base station equipment 2 and the terminal device 1 throughout. The CFN counter 41 increments the CFN value by "1" at an interval of a predetermined period of time. The CFN value generated by the CFN counter 41 is used as the timing information for synchronizing the timings among the base station control device 3, the base station equipment 2 and the terminal device 1 for every call.

<Configuration of Terminal Device>

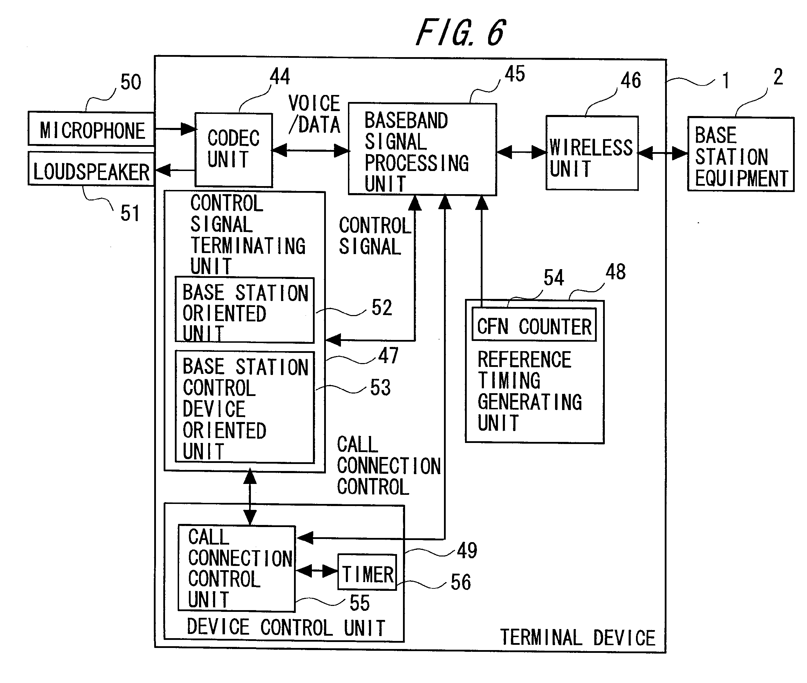

FIG. 6 is an explanatory diagram showing an example of the system architecture of the terminal device 1 according to the embodiment of the present invention. In FIG. 6, the terminal device 1 includes a CODEC unit 44, a baseband signal processing unit 45, a wireless unit 46, a control signal terminating unit 47, a reference timing generating unit 48 and a device control unit 49.

The control signal terminating unit 47 includes a base station equipment oriented unit 52 and a base station control device oriented unit 53. The reference timing generating unit 48 has a CFN counter 54. The device control unit 49 has a call connection control unit 55 and a timer 56. Moreover, a microphone 50 and a loudspeaker 51 are connected to the terminal device 1.

The CODEC unit 44 receives the voice from the microphone 50. The CODEC unit 44 generates the voice data into which the received voice is compression-coded, and transmits the voice data to the baseband signal processing unit 45. The CODEC unit 44, upon receiving the voice data from the baseband signal processing unit 45, converts the voice data into a voice signal for outputting the voice from the loudspeaker by executing a decoding (reproducing) process, and transmits the voice signal to the loudspeaker 51.

The device control unit 49 generates the control information with respect to the base station equipment 2 and the base station control device 3. Further, the device control unit 49 , when receiving the control information with respect to the terminal device 1 from the base station equipment 2 and the base station control device 3, executes the control based on the control information.

The wireless unit 46, upon receiving the signal to be transmitted to the base station equipment 2 from the baseband signal processing unit 45, converts the received signal into the radio signal, and transmits the radio signal to the base station equipment 2. Moreover, the wireless unit 46, when receiving the radio signal from the base station equipment 2, converts the received radio signal into the data format suited to the processing within the terminal device 1, and transmits the thus-converted data to the baseband signal processing unit 45.

The base station equipment oriented unit 52, upon receiving the control signal via the baseband signal processing unit 45 from the base station equipment 2, converts the control signal into a command format for the call connection control unit 55, and notifies the call connection control unit 55 of the-thus converted command. Further, the base station equipment oriented unit 52, when receiving the command for the base station equipment 2 from the call connection control unit 55, converts the command into the control signal to be transmitted to the base station equipment 2, and notifies the baseband signal processing unit 45 of the control signal.

The base station control device oriented unit 53, when receiving the control signal via the baseband signal processing unit 45 from the base station control device 3, converts the control signal into a command format for the call connection control unit 55, and notifies the call connection control unit 55 of the converted command. Moreover, the base station control device oriented unit 53, upon receiving the command for the base station control device 3 from the call connection control unit 55, converts the command into the control signal to be transmitted to the base station control device 3, and notifies the baseband signal processing unit 45 of the control signal.

The timer 56 retains the time. The time may take any mode enabling the synchronization among the base station control device 3, the base station equipment 2 and the terminal device 1. The timer 56 measures a predetermined period of time according to a command given from the call connection control unit 55.

The CFN counter 54 retains the CFNs each taking the same value for every call in the base station control device 3, the base station equipment 2 and the terminal device 1 throughout. The CFN counter 54 increments the CFN value by "1" at an interval of a predetermined period of time. The CFN value generated by the CFN counter 54 is used as the timing information for synchronizing the timings among the base station control device 3, the base station equipment 2 and the terminal device 1 for every call.

The microphone 50, when receiving a sound (voice), converts the sound into the signal, and transmits the signal to the CODEC unit 44. The loudspeaker 51, upon receiving the signal from the CODEC unit 44, outputs the sound corresponding to the received signal.

«Operational Example of Base Station Control Device»

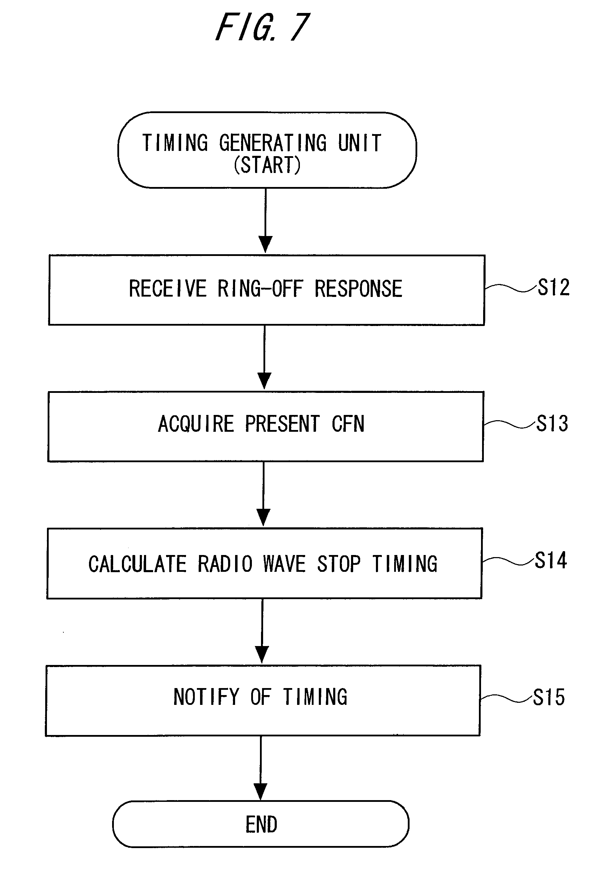

An operational example of the base station control device 3 according to the present invention will be described with reference to FIGS. 7 - 10. The operational example will be exemplified in a way that properly refers to FIG. 4.

<Processing Example in Timing Generating Unit>

FIG. 7 is a flowchart showing a processing example in the timing generating unit 29 of the base station control device 3. An operation, of the base station control device 3, for calculating a timing of stopping the radio waves transmitted by the terminal device 1 and a timing of stopping the radio waves transmitted by the base station equipment 2, will be explained with reference to the flowchart in FIG. 7. The flowchart shows a part of the processes executed by the base station control device 3 between step S2 and step S3 in the sequence in FIG. 3.

The mobile switchboard IF 19 receives a ring-off request (disconnection signal) from the communication device 59 via the mobile switchboard 57. The mobile switchboard IF 19 sends the ring-off request to the base station IF 18 via the intra-cabinet switch 17. The base station IF 18 transmits the ring-off request to the terminal device 1 via the base station equipment 2. The terminal device 1, upon receiving the ring-off request, transmits a ring-off response to the ring-off request.

The base station IF 18 receives the ring-off response from the terminal device 1 via the base station equipment 2. The base station IF 18 inputs the ring-off response to the terminal device facing signal L2 terminating unit 20 via the intra-cabinet switch 17. The terminal device facing signal L2 terminating unit 20 inputs the ring-off response to the timing generating unit 29 via the wireless resource management unit 25 and the intra-device resource management unit 27.

The timing generating unit 29 receives the ring-off response (S12). Thereupon, the timing generating unit 29 acquires the CFN (present CFN) at the present point of time from the CFN counter 60 provided in the reference timing generating unit 23 (S13).

Next, the timing generating unit 29 reads, from the offset storage unit 30, an offset value about the radio wave transmission stop timing sent by the terminal device 1 and an offset value about the radio wave transmission stop timing sent by the base station equipment 2.

Next, the timing generating unit 29 calculates the timing (A1) of stopping the radio waves transmitted by the terminal device 1 from the CFN at the present point of time and the offset value. The timing generating unit 29 calculates the timing (B1) of stopping the radio waves transmitted by the base station equipment 2 from the CFN at the present point of time and the offset value (S14).

Described herein is an example of calculating the timing of stopping the radio waves transmitted by the terminal device 1 and the timing of stopping the radio waves transmitted by the base station equipment 2. For example, let A1 be the timing of stopping the radio waves transmitted by the terminal device 1 and B1 be the timing of stopping the radio waves transmitted by the base station equipment 2. Herein, the offset storage unit 30 is stored with D1 as a number (value) about the predetermined CFN. For instance, the value D1 is given such as D1 = 3. Supposing that the CFN at the present point of time is E1, A1 and B1 are set to establish this relationship: A1 = B1 = E1 + D1.

Thus, the timing A1 and the timing B1 are set to the same CFN, whereby the terminal device 1 and the base station equipment 2 can simultaneously stop transmitting the radio waves, respectively.

The timing generating unit 29 notifies the wireless resource management unit 25 of the timing A1 that should be sent to the terminal device 1 via the intra-device resource management unit 27, and also notifies the wireless resource management unit 25 of the timing B1 that should be sent to the base station equipment 2 via the intra-device resource management unit 27 (S15). With the above processes being thus executed, the timing generating unit 29 terminates the processing. The processes described above being thus carried out, the timing generating unit 29 can calculate the timings of stopping the radio waves to the terminal device 1 and to the base station equipment 2.

<Example of Generating Uplink Channel Release Request in Wireless Resource Management Unit>

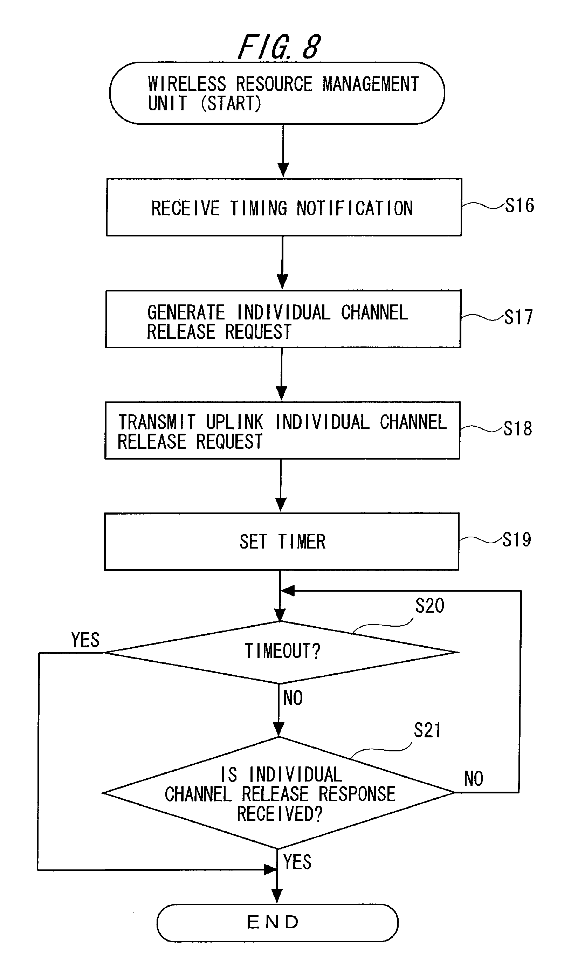

FIG. 8 is a flowchart showing a processing example in the wireless resource management unit 25 of the base station control device 3. The flowchart shows a part of the processes executed by the base station control device 3 between step S2 and step S3 in the sequence in FIG. 3.

At the first onset, the wireless resource management unit 25 receives the notification of the timing A1 of stopping the radio waves transmitted by the terminal device 1 from the timing generating unit 29 via the intra-device resource management unit 27 (S16).

Next, the wireless resource management unit 25 generates the uplink individual channel release request containing the radio wave stop timing A1 (S17). Subsequently, the wireless resource management unit 25 sends the thus-generated uplink individual channel release request to the base station IF 18 via the terminal device facing signal L2 terminating unit 20 and the intra-cabinet switch 17 (S18). The base station IF 18 transmits the uplink individual channel release request to the terminal device 1 via the base station equipment 2.

Subsequently, the wireless resource management unit 25 instructs the intra-device resource management unit 27 to set the timer (a predetermined period of time) for determining whether or not an uplink individual channel release response to the uplink individual channel release request is received within the predetermined period of time. The intra-device resource management unit 27 sets the predetermined period of time in the timer 28 (S19). The timer 28 starts measuring the predetermined period of time.

Next, the wireless resource management unit 25 checks by referring to the time measured by the timer 28 whether the predetermined period of time elapses or not, i.e., the timer comes to time-out or not (S20). At this time, the wireless resource management unit 25, when determining that the predetermined period of time does not elapse (S20; NO), advances to a process in step S21. While on the other hand, the wireless resource management unit 25, when determining that the predetermined period of time elapses (S20; YES), terminates the process (S22). In this case, a forcible call release process is executed.

In the process in step S21, the wireless resource management unit 25 determines whether the uplink individual channel release response is received or not. The wireless resource management unit 25 is set to receive the uplink individual channel release response from the terminal device facing signal L2 terminating unit 20. The wireless resource management unit 25, when determining that the uplink individual channel release response has been received (S21; YES), finishes the process by stopping the timer 28. Moreover, in the process in step S21, the wireless resource management unit 25, when determining that uplink individual channel release response is not yet received (S21; NO), returns to the process in step S20.

The processes described above being thus executed, the wireless resource management unit 25 generates the uplink individual channel release request containing the radio wave transmission stop timing A1 in the terminal device 1, and can send the uplink individual channel release request to the base station IF 18 via the terminal device facing signal L2 terminating unit 20 and the intra-cabinet switch 17. The base station IF 18 transmits the uplink individual channel release request of the wireless resource to the terminal device 1 via the base station equipment 2 (S3 in FIG. 3).

<Example of Generating Uplink Individual Channel Release Request in Wireless Resource Management Unit>

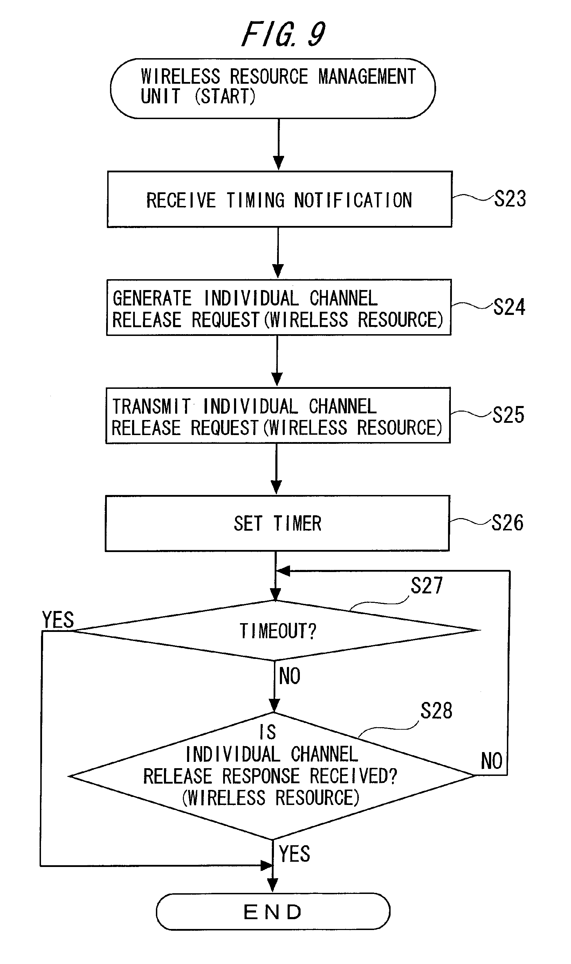

FIG. 9 is a flowchart showing an example of the processing by the wireless resource management unit 25 of the base station control device 3. The flowchart shows a part of the processes executed by the base station control device 3 between step S4 and step S6 in the sequence in FIG. 3.

At first, the wireless resource management unit 25 receives the notification of the timing (B1) of stopping the radio waves transmitted by the base station equipment 2 from the timing generating unit 29 via the intra-device resource management unit 27 (S23).

Next, the wireless resource management unit 25, when receiving the uplink individual channel release request of the wireless resource from the base station IF 18 via the intra-cabinet switch 17 and the terminal device facing signal L2 terminating unit 20, generates the downlink individual channel release request containing the radio wave stop timing B1 received from the timing generating unit 29 (S24).

Subsequently, the wireless resource management unit 25 sends the thus-generated downlink individual channel release request of the wireless resource to the base station IF 18 via the base station equipment facing signal L2 terminating unit 21 and the intra-cabinet switch 17 (S25). The base station IF 18 transmits the received downlink individual channel release request to the base station equipment 2 via the wired transmission path.

The wireless resource management unit 25 instructs the intra-device resource management unit 27 to set the timer (a predetermined period of time) for determining whether or not the uplink individual channel release response of the wireless resource is received within the predetermined period of time. The intra-device resource management unit 27 sets the predetermined period of time in the timer 28 (S26). The timer 28 starts measuring the predetermined period of time.

The wireless resource management unit 25 checks by referring to the time measured by the timer 28 whether the predetermined period of time elapses or not, i.e., checks whether the time-out occurs or not during a period for which to receive the downlink individual channel release response of the wireless resource (S27). The wireless resource management unit 25, if the unit 25 determines that the predetermined period of time does not elapse (S27; NO), advances to a process in step S28. In contrast with this, the wireless resource management unit 25, when determining that the predetermined period of time elapses (S27; YES), terminates the process. In this case, a forcible call release process is executed.

In the process in step S28, the wireless resource management unit 25 determines whether the downlink individual channel release response of the wireless resource is received or not. The wireless resource management unit 25 is set to receive the downlink individual channel release response of the wireless resource from the base station equipment facing signal L2 terminating unit 21.

The wireless resource management unit 25, when determining that the downlink individual channel release response has been received (S28; YES), finishes the process. Moreover, in the process in step S28, the wireless resource management unit 25, when determining that downlink individual channel release response of the wireless resource is not yet received (S28; NO), returns to the process in step S27.

The processes described above being thus executed, the wireless resource management unit 25 generates the downlink individual channel release request containing the radio wave transmission stop timing B1 of the base station equipment 2, and sends the downlink individual channel release request to the base station IF 18 via the base station equipment facing signal L2 terminating unit 21 and the intra-cabinet switch 17. The base station IF 18 transmits the downlink individual channel release request to the base station equipment 2 (S6 in FIG. 3).

<Example of Processing in Network-Side Resource Management Unit>

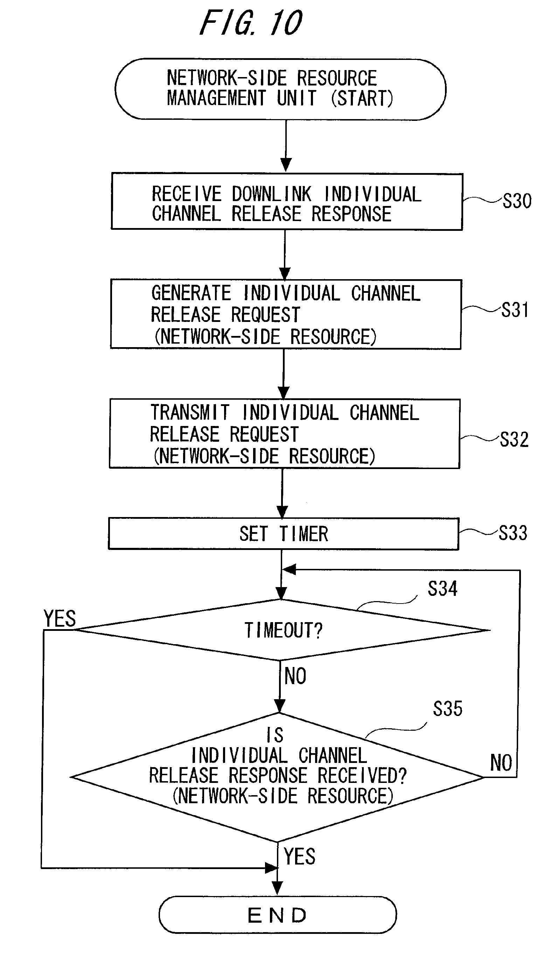

FIG. 10 is a flowchart showing an example of the processing in the network-side resource management unit 26 of the base station control device 3. The flowchart shows a part of the processes executed by the base station control device 3 between step S8 and step S9 in the sequence in FIG. 3. A description of the flowchart shown in FIG. 10 will be made based on the system architecture of the base station control device 3 illustrated in FIG. 4.

At the first onset, the network-side resource management unit 26 receives the downlink individual channel release response of the wireless resource via the base station equipment facing signal L2 terminating unit 21 (S30).

Next, the network-side resource management unit 26 generates the individual channel release request of the network-side resource, which is used for the base station equipment 2 to execute the individual channel network-side line release process (S31). Subsequently, the network-side resource management unit 26 sends the generated individual channel release request to the base station IF 18 via the base station equipment facing signal L2 terminating unit 21 and the intra-cabinet switch 17 (S32). The base station IF 18 transmits the received individual channel release request to the base station equipment 2 via the wired transmission path.

Next, the network-side resource management unit 26 sets, via the intra-device resource management unit 27, the timer (a predetermined period of time) for determining whether or not the individual channel release response to the individual channel release request is received within the predetermined period of time by use of the timer 28 (S33). The network-side resource management unit 26 checks by referring to the time measured by the timer 28 whether the predetermined period of time elapses or not, i.e., checks whether the time-out occurs or not during a period for which to receive the downlink individual channel release response of the wireless resource (S34). At this time, the network-side resource management unit 26, when determining that the predetermined period of time does not elapse (S34; NO), advances to a process in step S35. In contrast with this, the network-side resource management unit 26, when determining that the predetermined period of time elapses (S34; YES), terminates the process.

In the process in step S35, the network-side resource management unit 26 determines whether the individual channel release response of the network-side resource is received or not (S35). The network-side resource management unit 26 is set to receive the individual channel release response of the network-side resource from the base station equipment facing signal L2 terminating unit 21.

The network-side resource management unit 26, when determining that the individual channel release response of the network-side resource has been received (S35; YES), terminates the process in the network-side resource management unit 26. In the process in step S35, the network-side resource management unit 26, when determining that the individual channel release response of the network-side resource is not yet received (S35; NO), returns to the process in step S34.

The processes described above being thus executed, the network-side resource management unit 26 generates the individual channel release request of the network-side resource, and sends the generated individual channel release request to the base station IF 18 via the base station equipment facing signal L2 terminating unit 21 and the intra-cabinet switch 17. The base station IF 18 transmits the individual channel release request of the network-side resource to the base station equipment 2 (S9 in FIG. 3).

«Operational Example of Base Station Equipment»

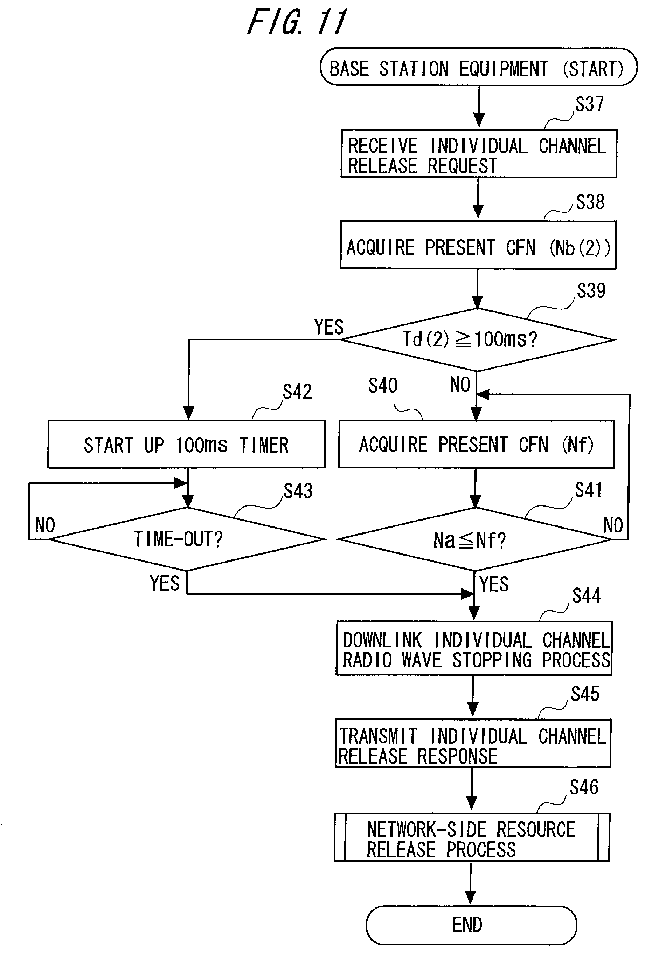

An operational example of the base station equipment 2 according to the present invention will be described with reference to FIG. 11. FIG. 11 is a flowchart showing the operational example in the base station equipment 2. The flowchart shows a part of the processes executed by the base station equipment 2 between step S6 and step S8 in the sequence in FIG. 3. A description of the flowchart shown in FIG. 11 will be made based on the system architecture of the base station equipment 2 illustrated in FIG. 5.

At first, the intra-device resource management unit 42 provided in the call process control unit 38 starts the process by receiving the downlink individual channel release request (the individual channel release request) of the wireless resource via the base station control device facing signal L2 terminating unit 37 (S37). The intra-device resource management unit 42 sends the received downlink individual channel release request to the wireless resource processing unit 39 provided in the baseband signal processing unit 34.

The wireless resource processing unit 39 acquires the CFN at the present point of time from the CFN counter 41 provided in the reference timing generating unit 36 (S38).

Next, the wireless resource processing unit 39 acquires the CFN number for the timing A1 of stopping the radio waves to be transmitted from the base station equipment 2 in response to the release request given from the intra-device resource management unit 42. Subsequently, the wireless resource processing unit 39 calculates time $T_d(2)$ till the radio wave transmission is stopped from the acquired CFN number and the CFN at the present point of time. For example, let Na be the CFN number for the radio wave transmission stop timing contained in the release request, $N_b(2)$ be the CFN number at the present point of time that is acquired in the process in step S38 and $T_c$ be the time expended for the CFN to be incremented by "1", and the time $T_d(2)$ till there is issued a command of stopping the radio waves to be transmitted toward the terminal device 1 from the base station equipment 2 is obtained such as $T_d(2) = T_c \times [N_b(2) - N_a]$.

Next, the wireless resource processing unit 39 determines whether or not the calculated time $T_d(2)$ till the radio wave transmission is stopped is equal to or larger than 100 ms (S39). In the process in step S39, if the calculated time $T_d(2)$ is shorter than 100 ms ($T_d(2) < 100$ ms) (S39; NO), the wireless resource processing unit 39 advances to a process in step S40. In the process in step S39, if the calculated time $T_d(2)$ is equal to or larger than 100 ms ($T_d(2) \geq 100$ ms) (S39; YES), the wireless resource processing unit 39 advances to a process in step S42.

The process in step S39 is a process for providing a predetermined period of time and, if the calculated time is longer than the predetermined period of time, speeding up the stoppage of the radio wave transmission and the release of the individual channel. Owing to this process, it is possible to decrease the time for the radio wave stopping process and the time till the individual channel is released and also to restrain dissipation of the power consumed for transmitting the radio waves owing to the decrease in the time.

In the process in step S40, the wireless resource processing unit 39 acquires the CFN at the present point of time from the CFN counter 41 provided in the reference timing generating unit 36 (S40). This CFN shall be designated by $N_f$. The wireless resource processing unit 39 determines whether it is the radio wave stop timing or not by use of the CFN acquired in the process in step S40 (S41). In the process in step S41, if determined not to be the radio wave stop timing ($N_a > N_f$) (S41; NO), the wireless resource processing unit 39 returns to the process in step S40. In the process in step S41, if determined to be the radio wave stop timing ($N_a \leq N_f$) (S41; YES), the wireless resource processing unit 39 advances to a process in step S44.

In the process in step S42, the wireless resource processing unit 39 starts up the 100 ms timer by use of the timer 43 via the intra-device resource management unit 42 (S42).

The wireless resource processing unit 39 determines by referring to the time measured by the timer 43 whether or not the 100 ms timer comes to the time-out (S43). The wireless resource processing unit 39, when determining that the 100 ms timer does not come to the time-out (S43; NO), returns to the process in step S43. Further, the wireless resource processing unit 39, when determining that the 100 ms timer comes to the time-out (S43; YES), advances to a process in step S44.

In the process in step S44, the wireless resource processing unit 39 instructs the wireless unit 33 to execute a downlink individual channel radio wave stopping process (radio wave stopping process) of the wireless resource.

The wireless unit 33, when receiving the instruction of the downlink individual channel radio wave stopping process of the wireless resource, stops the radio waves to be transmitted via the downlink individual channel for the terminal device 1. The wireless unit 33, after stopping the transmission radio waves for the terminal device 1, releases the downlink individual channel of the wireless resource.

Next, the wireless resource processing unit 39 sends the downlink individual channel release response of the wireless resource to the line IF 35 via the intra-device resource management unit 42 and the base station control device facing signal L2 terminating unit 37 (S45). The line IF 35 transmits the downlink individual channel release response to the base station control device 3.

Next, the line IF 35, when receiving the individual channel release request of the network-side resource from the base station control device 3, sends the received release request to the intra-device resource management unit 42 via the base station control device facing signal L2 terminating unit 37. The intra-device resource management unit 42, when receiving the individual channel release request of the network-side resource from the line IF 35, requests the network-side resource processing unit 40 to release the individual channel of the network-side resource. The network-side resource processing unit 40, when receiving the individual channel release request of the network-side resource, executes the individual channel network-side line release process by use of the line IF 35 (S46; S10 in FIG. 3). The network-side resource is thereby released.

After finishing the process in step S46, the network-side resource processing unit 40 notifies the intra-device resource management unit 42 of the release response. The intra-device resource management unit 42, upon receiving the release response about the network-side resource from the network-side resource processing unit 40, generates and sends the release response to the line IF 35 via the base station control device facing signal L2 terminating unit 37, and terminates the process. The release response is transmitted to the base station control device 3 from the line IF 35 (S11 in FIG. 3).

As described above, the base station equipment 2 receives the downlink individual channel release request of the wireless resource which contains the designation of the radio wave transmission stop timing from the base station control device 3, and stops the transmission of the radio waves via the downlink individual channel from the base station equipment 2 at the specified timing designated by the base station control device 3, thereby releasing the downlink individual channel. Next, the base station equipment 2, when receiving the release request of the network-side resource, releases the individual channel of the network-side resource between the base station equipment 2 and the base station control device 3.

«Operational Example of Terminal Device»

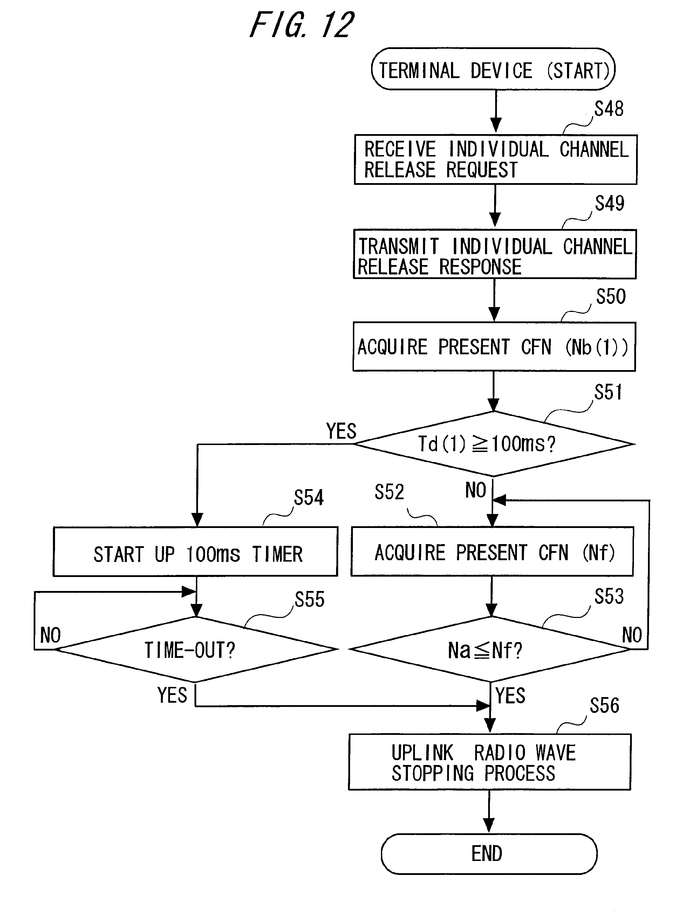

FIG. 12 is a flowchart showing an example of a processing operation in the terminal device 1. The flowchart shows a part of the processes executed by the terminal device 1 in steps S3 through S5 in the sequence in FIG. 3. A description of the flowchart shown in FIG. 12 will be made based on the system architecture of the base station equipment 2 illustrated in FIG. 6.

To start with, the call connection control unit 55 provided in the device control unit 49 receives the uplink individual channel release request of the wireless resource via the wireless unit 46, the baseband signal processing unit 45 and the base station control device oriented unit 53 (S48). Thereupon, the call connection control unit 55 generates the uplink individual channel release response of the wireless resource, and transmits this release response to the wireless unit 46 through the base station control device oriented unit 53 and the baseband signal processing unit 45 (S49). The wireless unit 46 transmits the received release response to the base station control device 3 via the base station equipment 2.

Next, the call connection control unit 55 notifies the baseband signal processing unit 45 of the uplink individual channel release request. The baseband signal processing unit 45 acquires the CFN at the present point of time from the CFN counter 54 (S50).

Further, the baseband signal processing unit 45 acquires, from the release request given from the call connection control unit 55, the CFN number for the timing of stopping the transmission of the radio waves to the base station equipment 2 from the terminal device 1. Subsequently, the baseband signal processing unit 45 calculates, from the acquired CFN number and the CFN at the present point of time, the time $T_d(1)$ till the transmission of the radio waves is stopped. For example, let $N_a$ be the CFN number for the transmission radio wave stop timing B1 contained in the uplink individual channel release request of the wireless resource, $N_b(1)$ be the CFN number at the present point of time which is acquired by the process in step S50 and $T_c$ be the time expended for the CFN number to be incremented by "1", and the time $T_d(1)$ till the radio waves to be transmitted are stopped is obtained such as

$$T_d(1) = T_c \times [N_b(1) - N_a].$$

Subsequently, the baseband signal processing unit 45 determines whether or not the calculated time $T_d(1)$ till the radio waves are stopped is equal to or larger than 100 ms (S51). In the process in step S51, if the calculated time $T_d(1)$ is determined to be shorter than 100 ms ($T_d(1) < 100$ ms) (S51; NO), the baseband signal processing unit 45 advances to a process in step S52. In the process in step S51, if the calculated time $T_d(1)$ is determined to be equal to or larger than 100 ms ($T_d(1) \geq 100$ ms) (S51; YES), the baseband signal processing unit 45 advances to a process in step S54.

The process in step S51 is a process for providing a predetermined period of time and, if the calculated time is longer than the predetermined period of time, speeding up the stoppage of the radio wave transmission and the release of the individual channel. Owing to this process, it is feasible to decrease the time for the radio wave stopping process and the time till the individual channel is released and also to restrain dissipation of the power consumed for transmitting the radio waves owing to the decrease in the time. In the process in step S52, the baseband signal processing unit 45 acquires the CFN at the present point of time from the CFN counter 54 (S52). This CFN is designated by $N_f$.

The baseband signal processing unit 45 determines, based on $N_f$ and $N_a$ acquired in the process in step S52, whether it is the radio wave stop timing $N_a$ or not (S53). When determining in the process in step S53 that it is not the radio wave stop timing $N_a$ ($N_a > N_f$) (S53; NO), the baseband signal processing unit 45 returns to the process in step S52. When determining in the process in step S53 that it is the radio wave stop timing $N_a$ ($N_a \leq N_f$) (S53; YES), the baseband signal processing unit 45 advances to the process in step S56.

In the process in step S54, the baseband signal processing unit 45 sets and starts up the 100 ms timer by use of the timer 56 via the call connection control unit 55 (S54). The baseband signal processing unit 45 determines in the way of referring to the time measured by the timer 56 whether the 100 ms timer comes to the time-out or not (S55). The baseband signal processing unit 45, when determining that the 100 ms timer does not come to the time-out (S55; NO), returns to the process in S55. The baseband signal processing unit 45, when determining that the 100 ms timer comes to the time-out (S55; YES), advances to a process in S56.

In step S56, the baseband signal processing unit 45 executes the uplink individual channel radio wave stopping process (radio wave stopping process) of the wireless resource (S56). At this time, the baseband signal processing unit 45 instructs the wireless unit 46 to stop transmitting the radio waves.

The wireless unit 46, upon receiving the instruction of executing the uplink individual channel radio wave stopping process of the wireless resource, stops transmitting the uplink individual channel radio waves to the base station equipment 2, and releases the uplink individual channel. The processing in FIG. 12 ends with finishing step S56.

As in the way described above, the terminal device 1 receives the uplink individual channel release request of the wireless resource, which contains the designation of the transmission radio wave stop timing, from the base station control device 3, thereby stopping the radio waves transmitted via the uplink individual channel from the terminal device 1 at the specified timing designated by the base station control device 3 and releasing the uplink individual channel.

« Power Consumed for Individual Channel at Ring-Off of Base Station Equipment»

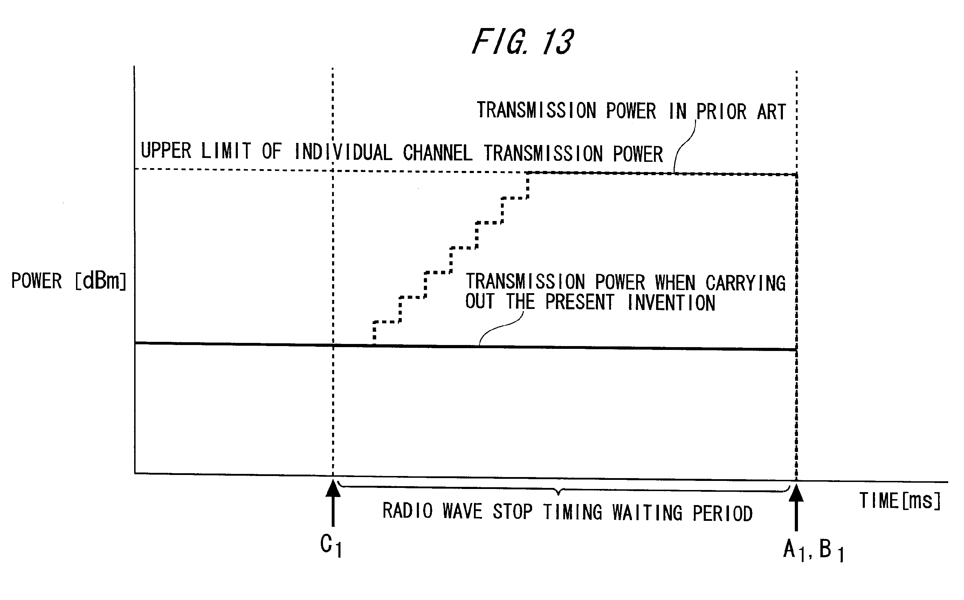

FIG. 13 is a diagram showing the electric power consumed for the downlink individual channel of the wireless resource when the base station equipment 2 terminates the talk (ring-off). Herein, FIG. 16 is referred to for a comparison. In the communication system to which the present invention is applied, as illustrated in FIG. 3, the base station control device 3 designates respectively the timing A1 contained in the individual channel release request to be transmitted to the terminal device 1 and the timing B1 contained in the individual channel release request to be transmitted to the base station equipment 2 so as to synchronize the uplink individual channel radio wave stopping process execution timing A1 with the downlink individual channel radio wave stopping process execution timing B1.

Accordingly, the base station equipment 2 and the terminal device 1 simultaneously stop transmitting the radio waves, and hence the process of stopping the radio waves transmitted by the terminal device 1 is not executed during a period of time up to the timing A1 when the base station equipment 2 executes the process of stopping the radio waves transmitted by the base station equipment 2 since a timing C1 when the terminal device 1 has transmitted the individual channel release response in the process in step S4 in FIG. 3, i.e., during a period of waiting time for the radio wave transmission stop timing. Therefore, the base station equipment 2 seamlessly receives the TPC bits transmitted from the terminal device 1. With this scheme, the transmission power via the downlink individual channel from the base station equipment 2 is controlled by the TPC bits till the transmission of the radio waves is stopped, and therefore the transmission power does not rise due to a malfunction. As illustrated in FIG. 13. Thus, the present communication system can restrain the malfunction.

Further, the electric power consumed by the base station equipment 2 is restrained to a greater degree in a way that suppresses a futile rise in the electric power than by the methods hitherto taken. It is therefore possible to restrain the wasteful dissipation of the electric power.

In a case where the base station equipment 2 is mounted with the system for making a new call acceptance determination that refers to remaining electric power into which the allocated electric power is subtracted from total electric power allocable in the downlink direction, as shown in FIG. 13, since the already-allocated call does not wastefully consume the electric power, there is a possibility that more of the new calls than by the conventional system can be accepted.

Further, in the system where the base station equipment stops the transmission radio waves earlier than the terminal device, owing to the application of the present invention, the transmission power via the uplink individual channel from the terminal device is controlled based on the TPC bits till the transmission of the radio waves is stopped and therefore becomes as illustrated in FIG. 13. Thus, the present communication system can restrain the malfunction also on the side of the terminal device.

Moreover, the individual channel used in the present communication system is defined as the control information employed also in the conventional system, and hence the present invention can be carried out simply by adding an improvement to the control information employed in the conventional system. Therefore, the present invention can be carried out with an information quantity (data size) that is substantially the same as of the control information in the conventional system.

«First Modified Example »

The scheme given above in the embodiment of the present invention is that the terminal device 1 and the base station equipment 2 stop the radio waves to be transmitted via the individual channel from the respective devices on the basis of the CFN designated by the base station control device 3. On the other hand, as will hereinafter be discussed, a modification of the present embodiment enables the terminal device 1 and the base station equipment 2 to stop the radio waves to be transmitted from the respective devices on the basis of time and a time width, which are designated by the base station control device 3.

<Modified Example of Executing Radio Wave Stopping Process Based on Timing Designated by Base Station Control Device>

In the case of the first modified example, the timing generating unit 29 provided in the base station control device 3 gets stored with the time when receiving the ring-off response while referring to the timer 28. Subsequently, the timing generating unit 29 reads an offset value of a predetermined time width from the offset storage unit 30. Next, the timing generating unit 29 calculates the time obtained by adding the offset value read from the offset storage unit 30 to the time when receiving the ring-off response. The timing generating unit 29 notifies the wireless resource management unit 25 of a result of this calculation.

The wireless resource management unit 25 of the base station control device 3 gets the time, which is inputted from the timing generating unit 29, contained respectively in the uplink individual channel release request and in the downlink individual channel release request.

Subsequently, the baseband signal processing unit 45 of the terminal device 1, on the occasion of receiving the uplink individual channel release request of the wireless resource that contains the transmission radio wave stop timing through the call connection control unit 55, instructs the wireless unit 46 to stop the radio waves to be transmitted via the uplink individual channel from the terminal device 1 at the time contained in the received release request in a way that refers to the time measured by the timer 56. The wireless unit 46 instructed to stop the transmission radio waves releases the uplink individual channel by stopping the radio waves to be transmitted via the uplink individual channel.

On the other hand, the wireless resource processing unit 39 of the base station equipment 2, on the occasion of receiving the downlink individual channel release request of the wireless resource that contains the transmission radio wave stop timing, instructs the wireless unit 33 to stop the radio waves to be transmitted from the base station equipment 2 at the time contained in the received release request in a way that refers to the time measured by the timer 43. The wireless unit 33 instructed to stop transmitting the radio waves stops the radio waves to be transmitted via the downlink individual channel.

As described above, in the first modified example, the terminal device 1 and the base station equipment 2 can stop transmitting the radio waves on the basis of the time (timings) contained in the individual channel release request generated by the base station control device 3.

<Modified Example of Executing Radio Wave Stopping Process Based on Time Width Designated by Base Station Control Device>

In the case of the present modified example, the offset storage unit 30 provided in the base station control device 3 is stored with an offset value about a time width till the transmission radio waves for the terminal device 1 are stopped and an offset value about a time width till the transmission radio waves for the base station equipment 2 are stopped. The time width till the transmission radio waves for the base station equipment 2 are stopped is shorter than a time width till the transmission radio waves for the terminal device 1 are stopped with respect to a period of time during which the terminal device 1 transmits the uplink individual channel release response of the wireless resource, then the base station control device 3 receives this release response and transmits the downlink individual channel release request of the wireless resource, and the base station equipment 2 receives this release request. The timing generating unit 29 reads the two pieces of offset values from the offset storage unit 30, and notifies the wireless resource management unit 25 of the offset value about the time width till the transmission radio waves for the terminal device 1 are stopped and the offset value about the time width till the transmission radio waves for the base station equipment 2 are stopped, respectively.

The uplink individual channel release processing unit 22 for the wireless resource and the downlink individual channel release processing unit 26 for the wireless resource get the time widths, inputted from the timing generating unit 29, contained in the individual channel release requests, respectively.

Subsequently, the baseband signal processing unit 45 provided in the terminal device 1, when receiving the uplink individual channel release request of the wireless resource that contains the transmission radio wave stop timing, refers to the time measured by the timer 56, and instructs the wireless unit 46 to stop the radio waves transmitted via the uplink individual channel from the terminal device 1 after the time contained in the received release request. The wireless unit 46 instructed to stop the transmission radio waves releases the uplink individual channel by stopping the radio waves to be transmitted via the uplink individual channel.

The wireless resource processing unit 34 provided in the base station equipment 2, when receiving the downlink individual channel release request of the wireless resource that contains the transmission radio wave stop timing through the intra-device resource management unit 42, refers to the time measured by the timer 43, and instructs the wireless unit 33 to stop the radio waves transmitted from the base station equipment 2 after the time contained in the received release request. The wireless unit 33 instructed to stop the transmission radio waves releases the downlink individual channel by stopping the radio waves to be transmitted via the downlink individual channel.

As described above, the present modified example enables the terminal device 1 and the base station equipment 2 to stop transmitting the radio waves on the basis of the time widths contained in the individual channel release requests generated by the base station control device 3.

«Second Modified Example»

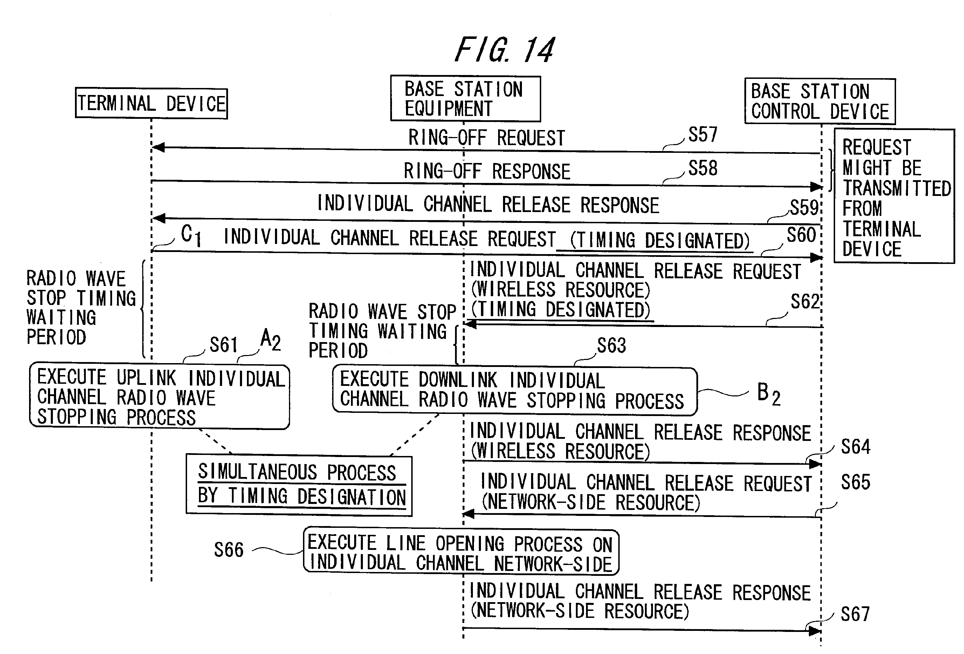

FIG. 14 is a diagram showing a ring-off sequence according to the modified example of the present invention. FIG. 14 shows the ring-off sequence in such a case that in the communication system as illustrated in FIG. 1, the communication disconnecting signal transmitted from the communication device 59 is received by the mobile switchboard 57 via the public network 58, then the disconnecting signal received by the mobile switchboard 57 is transmitted as a ring-off request to the base station control device 3, and the base station control device 3 receives this ring-off request.

To begin with, the base station control device 3 transmits the ring-off request sent from the communication device 59 to the terminal device 1 via the base station equipment 2 (S57). The terminal device 1, when receiving the ring-off request from the base station control device 3 via the base station equipment 2, transmits a ring-off response to the base station control device 3 (S58).

The base station control device 3, upon receiving the ring-off response from the terminal device 1, transmits the uplink individual channel release request (individual channel release request) of the wireless resource to the terminal device 1 (S59).

The terminal device 1 retains the offset value of the predetermined CFN as the radio wave transmission stop timing. The terminal device 1, when receiving the uplink individual channel release request, generates an uplink individual channel release response containing this offset value. The terminal device 1 transmits the thus-generated uplink individual channel release response toward the base station control device 3 (S60).

Further, the terminal device 1, upon receiving the uplink individual channel release request, executes the uplink individual channel radio wave stopping process of the wireless resource at the timing retained by the terminal device 1. Namely, the terminal device 1 stops transmitting the radio waves to the uplink individual channel at the timing A2 (S61). The terminal device 1 releases the uplink individual channel release after stopping the radio waves.

On the other hand, the base station control device 3, when receiving the individual channel release response from the terminal device 1 via the base station equipment 2, transmits the downlink individual channel release request of the wireless resource to the base station equipment 2 (S62). The individual channel release request contains the radio wave transmission stop timing contained in the uplink individual channel release response.

The base station equipment 2, upon receiving the individual channel release request, executes, based on the radio wave stop timing information contained in the release request, the downlink individual channel individual channel radio wave stopping process of the wireless resource. Namely, the base station equipment 2 stops transmitting the radio waves to the downlink individual channel at the timing $B_2$ (which is the same as the timing $A_2$) based on the timing information contained in the release response (S63). The base station equipment 2, after stopping the radio waves transmitted via the downlink individual channel, releases the downlink individual channel. Thus, the terminal device 1 and the base station equipment 2 stop transmitting the radio waves at the same timing. The base station equipment 2, after releasing the downlink individual channel, transmits the downlink individual channel release response to the base station control device 3 (S64).

The base station control device 3, upon receiving the downlink individual channel release response from the base station equipment 2, transmits the individual channel release request of the network-side resource to the base station equipment 2 (S65).

The base station equipment 2, when receiving the individual channel release request from the base station control device 3, executes the individual channel network-side line release process (S66). The base station equipment 2 releases the individual channel for the network-side resource by executing the individual channel network-side line release process.

The base station equipment 2, after releasing the individual channel for the network-side resource, transmits the individual channel release response of the network-side resource (S67). The base station control device 3 receives the individual channel release response of the network-side resource from the base station equipment 2.

As described above, in the present communication system, the terminal device 1 stops transmitting the radio waves at the timing (the timing $A_2$ in FIG. 14) based on the uplink individual channel release request, while the base station equipment 2 stops transmitting the radio waves at the timing (the timing $B_2$ in FIG. 14) based on the downlink individual channel release request. Therefore, the terminal device 1 gets the timing information for synchronizing the transmission radio wave stop timings (i.e., $A_2 = B_2$) contained in the uplink individual channel release request and in the downlink individual channel release request.

Note that a case where the terminal device 1 generates and transmits the ring-off request involves only reversing the ring-off sequence shown in FIG. 14, wherein the terminal device 1 transmits the ring-off request and receives the ring-off response (namely, the arrowheads of steps S1 and S2 are reversed), and other processes as those described above are executed.

Accordingly, as illustrated in this modified example, the terminal device 1 retains the offset value of the timing for stopping the transmission of the radio waves, and the offset value is transferred to the base station equipment 2, whereby the terminal device 1 and the base station equipment 2 can execute stopping the transmission of the radio waves so as to stop transmitting the radio waves simultaneously.

**Claims**

1. A wireless communication control device comprising:

   a generating unit generating control information used for respective wireless devices to simultaneously stop transmitting radio waves with respect to said wireless devices transmitting, when the radio waves are transmitted and received between said wireless devices, to said another wireless device, the radio waves containing power control information for controlling, based on the radio waves received by at least said one wireless device from said another wireless device, transmission power of the radio waves transmitted by said another wireless device; and

a transmitting unit transmitting the control information toward each of said wireless devices.

2. A wireless communication control device according to claim 1,
wherein the control information is timing information that specifies a timing when each of said wireless devices stops transmitting the radio waves.

3. A wireless communication control device according to claim 2,
wherein said generating unit generates the timing information specified by use of a sequence number of a frame transmitted and received as carried on the radio waves between said wireless devices.

4. A wireless communication control device according to claim 2,
wherein said generating unit generates the timing information specified by use of time.

5. A wireless communication control device according to claim 3,
wherein said generating unit includes: a sequence number management unit managing the present sequence number; and an offset storage unit stored with an offset value of the sequence number, and said generating unit generates, as the timing information, a sequence number by adding the offset value obtained from said offset storage unit to the present sequence number obtained from said sequence number management unit.

6. A wireless communication control device according to claim 1,
wherein one of said wireless devices is a wireless terminal device,
the other of said wireless devices is base station equipment,
when said wireless terminal device performs bidirectional communications with a communication-partner wireless terminal device, a first channel used for transmitting the radio waves to said base station equipment from said wireless terminal device and a second channel used for transmitting the radio waves to said wireless terminal device from said base station equipment are ensured as individual channels used for the bidirectional communications between said wireless terminal device and said base station equipment, and
said transmitting unit transmits, as triggered by receiving a communication terminating request, a first channel release request containing the control information to said wireless terminal device, and transmits a second channel release request containing the control information to said base station equipment.

7. A wireless device transmitting, when transmitting and receiving radio waves to and from a communication partner wireless device, to said communication partner wireless device the radio waves containing power control information, obtained based on the radio waves received from said communication partner wireless device, for controlling transmission power transmitted by said communication partner wireless device, and/or controlling the transmission power transmitted to said communication partner wireless device on the basis of the power control information received from said communication partner wireless device, said wireless device comprising:

a receiving unit receiving control information containing a timing at which said communication partner wireless device stops transmitting the radio waves to said wireless device; and
a control unit stopping the transmission of the radio waves to said communication partner wireless device according to the timing received by said receiving unit.

8. A wireless communication control device controlling termination of wireless communications under a condition of executing the wireless communications by use of a first channel employed for transmitting the radio waves from a first wireless device to a second wireless device and a second channel employed for transmitting the radio waves from said second wireless device to said first wireless device, and transmitting and receiving, via the first channel and/or the second channel, the control information for controlling the transmission power of the radio waves via at least one of the first channel and the second channel, said wireless communication control device comprising:

means transmitting, to said first wireless device, a first channel release request used for said first wireless device to stop transmitting the radio waves;
means receiving a response, generated by said first wireless device, to the first channel release request, and containing timing information specifying a timing at which said first wireless device stops transmitting the radio waves; and
means transmitting, to said second wireless device, a second channel release request containing the timing information so that said second wireless device stops transmitting the radio waves according to the timing information.

9. A wireless communication control device according to claim 1, further comprising a receiving unit receiving a message for terminating the transmission and the reception of the radio waves,
wherein said generating unit determines the radio wave transmission stop timing in each of said wireless devices on the basis of the time when receiving the message, and generates the control information containing the timing.

# FIG. 1

PUBLIC NETWORK — 58

COMMUNICATION DEVICE — 59

MOBILE SWITCHBOARD — 57

BASE STATION CONTROL DEVICE — 3

WIRED TRANSMISSION PATH

BASE STATION EQUIPMENT — 2

WIRED TRANSMISSION PATH

WIRELESS TRANSMISSION PATH

TERMINAL DEVICE 1 (1-1)
1 (1-2) 1 (1-4)
1 (1-3) 1 (1-5)

FIG. 2

## FIG. 3

EP 1 924 010 A1

# FIG. 4

## FIG. 5

BASEBAND SIGNAL PROCESSING UNIT 34

WIRELESS RESOURCE PROCESSING UNIT 39

NETWORK-SIDE RESOURCE PROCESSING UNIT 40

TERMINAL DEVICE 1

WIRELESS UNIT 33

VOICE/DATA

LINE IF 35

BASE STATION CONTROL DEVICE 3

CONTROL SIGNAL

CALL PROCESS CONTROL

BASE STATION CONTROL DEVICE FACING SIGNAL L2 TERMINATING UNIT 37

CFN COUNTER 36 41

REFERENCE TIMING GENERATING UNIT

INTRA-DEVICE RESOURCE MANAGEMENT UNIT 42

TIMER 43

38

CALL PROCESS CONTROL UNIT

BASE STATION EQUIPMENT

2

EP 1 924 010 A1

# FIG. 6

# FIG. 7

```
TIMING GENERATING UNIT
        (START)
```

RECEIVE RING-OFF RESPONSE — S12

ACQUIRE PRESENT CFN — S13

CALCULATE RADIO WAVE STOP TIMING — S14

NOTIFY OF TIMING — S15

```
         END
```

## FIG. 8

```
    ┌─────────────────────────────────┐
    │  WIRELESS RESOURCE MANAGEMENT   │
    │  UNIT (START)                   │
    └─────────────────────────────────┘
                    │
                    ▼
    ┌─────────────────────────────────┐
    │  RECEIVE TIMING NOTIFICATION    │  S16
    └─────────────────────────────────┘
                    │
                    ▼
    ┌─────────────────────────────────┐
    │  GENERATE INDIVIDUAL CHANNEL    │  S17
    │  RELEASE REQUEST                │
    └─────────────────────────────────┘
                    │
                    ▼
    ┌─────────────────────────────────┐
    │  TRANSMIT UPLINK INDIVIDUAL     │  S18
    │  CHANNEL RELEASE REQUEST        │
    └─────────────────────────────────┘
                    │
                    ▼
    ┌─────────────────────────────────┐
    │  SET TIMER                      │  S19
    └─────────────────────────────────┘
                    │
                    ▼
           ◇ TIMEOUT? ◇  S20
      YES ──┘        │ NO
                     ▼
      ◇ IS INDIVIDUAL CHANNEL RELEASE
        RESPONSE RECEIVED? ◇  S21 ── NO
                     │ YES
                     ▼
                 ┌─────────┐
                 │  END    │
                 └─────────┘
```

# FIG. 9

WIRELESS RESOURCE MANAGEMENT
UNIT (START)

↓

RECEIVE TIMING NOTIFICATION — S23

↓

GENERATE INDIVIDUAL CHANNEL
RELEASE REQUEST(WIRELESS RESOURCE) — S24

↓

TRANSMIT INDIVIDUAL CHANNEL
RELEASE REQUEST(WIRELESS RESOURCE) — S25

↓

SET TIMER — S26

↓

S27

TIMEOUT?

YES ← │ NO ↓

S28

IS
INDIVIDUAL CHANNEL
RELEASE RESPONSE RECEIVED?
(WIRELESS RESOURCE) NO →

YES ↓

END

## FIG. 10

```
┌─────────────────────────────┐
│  NETWORK-SIDE RESOURCE      │
│  MANAGEMENT UNIT (START)    │
└─────────────────────────────┘
              │
              ▼
┌─────────────────────────────┐
│  RECEIVE DOWNLINK INDIVIDUAL │ ~S30
│  CHANNEL RELEASE RESPONSE   │
└─────────────────────────────┘
              │
              ▼
┌─────────────────────────────┐
│  GENERATE INDIVIDUAL CHANNEL │ ~S31
│  RELEASE REQUEST            │
│  (NETWORK-SIDE RESOURCE)    │
└─────────────────────────────┘
              │
              ▼
┌─────────────────────────────┐
│  TRANSMIT INDIVIDUAL CHANNEL │ ~S32
│  RELEASE REQUEST            │
│  (NETWORK-SIDE RESOURCE)    │
└─────────────────────────────┘
              │
              ▼
┌─────────────────────────────┐
│  SET TIMER                  │ ~S33
└─────────────────────────────┘
              │
              ▼
        ◇ TIMEOUT? ◇  S34
      YES │      │ NO
          │      ▼
          │   ◇ IS INDIVIDUAL CHANNEL
          │     RELEASE RESPONSE RECEIVED?
          │     (NETWORK-SIDE RESOURCE) ◇  S35
          │      │ NO
          │      │ YES
          ▼      ▼
┌─────────────────────────────┐
│           END               │
└─────────────────────────────┘
```

## FIG. 11

```
        ┌─────────────────────────────────────┐
        │  BASE STATION EQUIPMENT (START)     │
        └─────────────────────────────────────┘
                          │
                          ▼               S37
        ┌─────────────────────────────────────┐
        │  RECEIVE INDIVIDUAL CHANNEL         │
        │  RELEASE REQUEST                    │
        └─────────────────────────────────────┘
                          │
                          ▼               S38
        ┌─────────────────────────────────────┐
        │  ACQUIRE PRESENT CFN (Nb(2))        │
        └─────────────────────────────────────┘
                          │
                          ▼               S39
                     ◇ Td(2)≧100ms? ◇
```

YES  —  $Td(2) \geqq 100ms?$  —  NO

S42    S40

```
┌──────────────────────┐   ┌──────────────────────┐
│  START UP 100ms TIMER│   │ ACQUIRE PRESENT CFN(Nf)│
└──────────────────────┘   └──────────────────────┘
```

S43    S41

NO — TIME-OUT? —    $Na \leqq Nf?$ — NO

YES    YES

S44

```
┌─────────────────────────────────────┐
│  DOWNLINK INDIVIDUAL CHANNEL         │
│  RADIO WAVE STOPPING PROCESS         │
└─────────────────────────────────────┘
                  │
                  ▼               S45
┌─────────────────────────────────────┐
│  TRANSMIT INDIVIDUAL CHANNEL        │
│  RELEASE RESPONSE                   │
└─────────────────────────────────────┘
                  │
                  ▼               S46
┌─────────────────────────────────────┐
│  NETWORK-SIDE RESOURCE              │
│  RELEASE PROCESS                    │
└─────────────────────────────────────┘
                  │
                  ▼
        ┌─────────────────┐
        │       END       │
        └─────────────────┘
```

## FIG. 12

```
TERMINAL DEVICE (START)
          │
          ▼                                    S48
┌─────────────────────────────┐
│ RECEIVE INDIVIDUAL CHANNEL   │
│ RELEASE REQUEST              │
└─────────────────────────────┘
          │                                    S49
          ▼
┌─────────────────────────────┐
│ TRANSMIT INDIVIDUAL CHANNEL  │
│ RELEASE RESPONSE             │
└─────────────────────────────┘
          │                                    S50
          ▼
┌─────────────────────────────┐
│ ACQUIRE PRESENT CFN (Nb(1))  │
└─────────────────────────────┘
          │                                    S51
          ▼
    YES  ◇ Td(1)≧100ms? ◇
  ◄───────              
          │ NO
```

S54 — START UP 100ms TIMER

S52 — ACQUIRE PRESENT CFN (Nf)

S55 — TIME-OUT?   NO / YES

S53 — Na≦Nf?   NO / YES

S56 — UPLINK RADIO WAVE STOPPING PROCESS

END

# FIG. 13

POWER [dBm]

TRANSMISSION POWER IN PRIOR ART

UPPER LIMIT OF INDIVIDUAL CHANNEL TRANSMISSION POWER

TRANSMISSION POWER WHEN CARRYING
OUT THE PRESENT INVENTION

RADIO WAVE STOP TIMING WAITING PERIOD

TIME[ms]

$C_1$

$A_1, B_1$

EP 1 924 010 A1

# FIG. 14

TERMINAL DEVICE ..... BASE STATION EQUIPMENT ..... BASE STATION CONTROL DEVICE

RING-OFF REQUEST — S57

RING-OFF RESPONSE — S58

INDIVIDUAL CHANNEL RELEASE RESPONSE — S59

C₁ INDIVIDUAL CHANNEL RELEASE REQUEST (TIMING DESIGNATED) — S60

REQUEST MIGHT BE TRANSMITTED FROM TERMINAL DEVICE

RADIO WAVE STOP TIMING WAITING PERIOD

INDIVIDUAL CHANNEL RELEASE REQUEST (WIRELESS RESOURCE) (TIMING DESIGNATED) — S62

RADIO WAVE STOP TIMING WAITING PERIOD

S61 A₂
EXECUTE UPLINK INDIVIDUAL CHANNEL RADIO WAVE STOPPING PROCESS

S63
EXECUTE DOWNLINK INDIVIDUAL CHANNEL RADIO WAVE STOPPING PROCESS — B₂

INDIVIDUAL CHANNEL RELEASE RESPONSE (WIRELESS RESOURCE) — S64

SIMULTANEOUS PROCESS BY TIMING DESIGNATION

INDIVIDUAL CHANNEL RELEASE REQUEST (NETWORK-SIDE RESOURCE) — S65

S66 — EXECUTE LINE OPENING PROCESS ON INDIVIDUAL CHANNEL NETWORK-SIDE

INDIVIDUAL CHANNEL RELEASE RESPONSE (NETWORK-SIDE RESOURCE) — S67

EP 1 924 010 A1

## FIG. 15

| TERMINAL DEVICE | BASE STATION EQUIPMENT | BASE STATION CONTROL DEVICE |

RING-OFF REQUEST

RING-OFF RESPONSE

INDIVIDUAL CHANNEL RELEASE REQUEST

INDIVIDUAL CHANNEL RELEASE RESPONSE

REQUEST MIGHT BE TRANSMITTED FROM TERMINAL DEVICE

$A_0$

EXECUTE UPLINK INDIVIDUAL CHANNEL RADIO WAVE STOPPING PROCESS

Tdeley

INDIVIDUAL CHANNEL RELEASE REQUEST (WIRELESS RESOURCE)

EXECUTE DOWNLINK INDIVIDUAL CHANNEL RADIO WAVE STOPPING PROCESS $B_0$

INDIVIDUAL CHANNEL RELEASE RESPONSE (WIRELESS RESOURCE)

INDIVIDUAL CHANNEL RELEASE REQUEST (NETWORK-SIDE RESOURCE)

EXECUTE INDIVIDUAL CHANNEL NETWORK-SIDE LINE OPENING PROCESS

INDIVIDUAL CHANNEL RELEASE RESPONSE (NETWORK-SIDE RESOURCE)

EP 1 924 010 A1

FIG. 16

POWER UPPER LIMIT
LEVEL-OFF PERIOD

UPPER LIMIT OF INDIVIDUAL CHANNEL
TRANSMISSION POWER

POWER [dbm]

$P_{Increase}$

TPC bit MIS-RECOGNITION PERIOD $(T_{deley})$

TIME[ms]

$A_0$

$B_0$

EP 1 924 010 A1

## INTERNATIONAL SEARCH REPORT

| International application No. |
|---|
| PCT/JP2005/016345 |

A. CLASSIFICATION OF SUBJECT MATTER
*H04B7/26*(2006.01), *H04J13/00*(2006.01)

According to International Patent Classification (IPC) or to both national classification and IPC

B. FIELDS SEARCHED

Minimum documentation searched (classification system followed by classification symbols)
*H04B7/005*(2006.01), *H04B7/24*(2006.01)-*H04B7/26*(2006.01),
*H04Q7/00*(2006.01)-*H04Q7/38*(2006.01), *H04J13/00*(2006.01)

Documentation searched other than minimum documentation to the extent that such documents are included in the fields searched
Jitsuyo Shinan Koho            1922-1996   Jitsuyo Shinan Toroku Koho   1996-2005
Kokai Jitsuyo Shinan Koho      1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 10-178377 A (NEC Corp.), 30 June, 1998 (30.06.98), Par. No. [0023] (Family: none) | 1-9 |
| A | JP 11-234201 A (Mitsubishi Electric Corp.), 27 August, 1999 (27.08.99), Par. Nos. [0024] to [0025] (Family: none) | 1-9 |

☐ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 November, 2005 (14.11.05) | 22 November, 2005 (22.11.05) |

| Name and mailing address of the ISA/ Japanese Patent Office | Authorized officer |
|---|---|
| Facsimile No. | Telephone No. |

Form PCT/ISA/210 (second sheet) (April 2005)

**EP 1 924 010 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004112097 A

- JP 2004032211 A

**Non-patent literature cited in the description**

- **KEIJI TACHIKAWA.** W-CDMA Mobile Communication System. Maruzen, 2001, 178-179